# EUROPÄISCHE PATENTSCHRIFT

(11) **EP 3 423 385 B1**
(45) Veröffentlichungstag und Bekanntmachung des Hinweises auf die Patenterteilung: **01.04.2020**
(21) Anmeldenummer: 17705638.9
(22) Anmeldetag: 17.02.2017
(51) Int. Cl.: B65G 47/84, B67C 7/00, B65G 43/08

(54) **VORRICHTUNG SOWIE VERFAHREN ZUM LAGESTABILEN TRANSPORT VON BEHÄLTERN**
DEVICE AND METHOD FOR THE POSITIONALLY STABLE TRANSPORT OF CONTAINERS
DISPOSITIF ET PROCÉDÉ POUR LE TRANSPORT STABLE DE CONTENANTS

(30) Priorität: 03.03.2016 DE 102016103845
(43) Veröffentlichungstag der Anmeldung: 09.01.2019
(73) Patentinhaber: KHS GmbH, 44143 Dortmund (DE)
(72) Erfinder: LELIE, Thomas, 47533 Kleve (DE); PIETERS, Sebastian, 47533 Kleve (DE)
(86) Internationale Anmeldenummer: PCT/EP2017/053639
(87) Internationale Veröffentlichungsnummer: WO 2017/148713

(56) Entgegenhaltungen:
- EP-A1- 0 084 495
- FR-A- 1 171 558
- US-A- 5 806 656
- US-A1- 2011 108 389

## Beschreibung

Die Erfindung bezieht sich auf eine Vorrichtung zum lagestabilen Transport von Behältern entlang einer teilkreisförmigen Transportstrecke zwischen einem Behältereinlauf und einem Behälterauslauf. Die vorliegende Erfindung betrifft weiterhin ein Verfahren zum lagestabilen Transport von Behältern entlang einer teilkreisförmigen Transportstrecke zwischen einem Behältereinlauf und einem Behälterauslauf.

Transportstrecken, wie beispielsweise Transportsterne, sind aus dem Stand der Technik hinlänglich bekannt. Insbesondere ist aus der Druckschrift DE 10 2012 100 810 B4 eine Vorrichtung zur Bildung von Verpackungseinheiten bekannt, bei der die Behälter zunächst durch ein oder mehrere Behälterbehandlungsmodule geführt und anschließend an eine Gruppierungseinrichtung übergeben werden, in der die Gruppierung mehrerer Behälter abhängig von der gewünschten Gebindegröße erfolgt. Die Förderung der Behälter durch das zumindest eine Behälterbehandlungsmodul erfolgt dabei auf einer kreissegmentförmigen Transportbahn, wohingegen die Förderung durch die Gruppierungseinrichtung auf einer linearen Transportbahn erfolgt. Die Überleitung zwischen dem Behälterbehandlungsmodul und der Gruppierungseinrichtung wird mittels eines Transportelements vollzogen, das in Zusammenwirken mit einem Geländer die Behälter in Richtung der Gruppierungseinrichtung weiterleitet.

Nachteilig hierbei ist, dass durch die Führung mittels eines Geländers keine lagestabile Übergabe ermöglich wird. Dies ist besonders dann nachteilig, wenn eine lagestabile, also insbesondere verdrehungsfreie, Übergabe der Behälter zur Gruppierungseinrichtung hin notwendig ist, so dass beispielsweise bestimmte Behältermerkmale (z.B. Embossings, Aufdrucke oder Etikettenbereiche) oder auch Klebemittelaufträge zur Herstellung von Klebeverbindungen zwischen den Behältern in dem zu erstellenden Behältergebinde eine bestimmte Lage haben sollen. Unter verdrehfrei ist dabei zu verstehen, es erfolgt keine Verdrehung des Behälters um die eigene Behälterhochachse relativ zum Transportstern bzw. der Oberfläche der Sterntasche in welche der Behälter eingestellt ist. US 5,806,656 offenbart eine Vorrichtung nach dem Oberbegriff des Anspruchs 1.

Ausgehend hiervon ist es Aufgabe der vorliegenden Erfindung, eine Vorrichtung sowie ein Verfahren zum Transport von Behältern entlang einer teilkreisförmigen Transportstrecke zwischen einem Behältereinlauf und einem Behälterauslauf anzugeben, die einen lagestabilen Transport von Behältern, insbesondere ohne oder im Wesentlichen ohne Verdrehen der Behälter um deren Behälterhochachse ermöglicht.

Diese Aufgabe wird durch eine Vorrichtung mit den Merkmalen des unabhängigen Patentanspruches 1 gelöst. Ein Verfahren ist Gegenstand des nebengeordneten Patentanspruchs 9. Die jeweiligen Unteransprüche betreffen dabei besonders vorteilhafte Ausführungsvarianten der Erfindung.

Gemäß einem ersten Aspekt bezieht sich die Erfindung auf eine Vorrichtung zum lagestabilen Transport von Behältern entlang einer teilkreisförmigen Transportstrecke zwischen einem Behältereinlauf und einem Behälterauslauf, umfassend eine zentrale Steuereinheit, einen um eine Rotationsachse in Transportrichtung mit einer Rotationsgeschwindigkeit antreibbaren Transportstern mit mehreren an seinem Außenumfang vorgesehenen Ausnehmungen zur Aufnahme der Behälter sowie wenigstens eine Riemenanordnung mit zumindest einem endlos umlaufenden Sicherungsriemen, der mittels einer steuerbaren Antriebseinrichtung mit zumindest einer Riemengeschwindigkeit antreibbar ist, sowie weiter aufweisend eine mit der Riemenanordnung zusammenwirkende dynamische Riemenspeichereinheit, wobei der Transportstern zur Lagestabilisierung der Behälter zumindest im Bereich der teilkreisförmigen Transportstrecke mit dem wenigstens einen Sicherungsriemen in Wirkverbindung steht, wobei mittels des wenigstens einen Sicherungsriemens im Bereich der teilkreisförmigen Transportstrecke hierfür ein wirksamer Riemenabschnitt mit zumindest einem ersten Transportabschnitt in welchem keine Behälter in den Ausnehmungen aufgenommen sind und/oder einem zweiten Transportabschnitt in welchem Behälter in den Ausnehmungen aufgenommen sind ausbildbar sind, wobei die Vorrichtung erfindungsgemäß eine Erfassungseinrichtung zur Erfassung von Behältern im Transportweg und/oder des radialen und/oder winkelmäßigen Verlaufes des Sicherungsriemens im Bereich des wirksamen Riemenabschnittes und insbesondere des ersten und zweiten Transportabschnittes aufweist. Eine solche Erfassungseinheit könnte aber auch darin bestehen, dass an irgend einer Stelle stromaufwärts der Vorrichtung zum lagestabilen Transport von Behältern diese erfasst werden und die Daten des Befüllgrades übermittelt bzw. zum erwarteten Befüllgrad über eine Steuereinheit ermittelt und in geeigneter Weise zur Regel- oder Steuerung der Antriebe genutzt werden. Dabei ist die Vorrichtung dazu eingerichtet, den wenigstens einen Sicherungsriemen zumindest im Bereich des wirksamen Riemenabschnittes mit einer zu der Rotationsgeschwindigkeit des Transportsterns synchron ausbildeten Riemengeschwindigkeit anzutreiben, indem zur lagestabilen Zuführung der teilkreisförmigen Transportstrecke mit Behälter im zweiten Transportabschnitt, die sich abhängig von der Anzahl im zweiten Transportabschnitt befindlichen Behälter erforderliche partielle Erhöhung der Riemengeschwindigkeit mittels der dynamischen Riemenspeichereinheit ausgleichbar ist.

Erfindungsgemäß ist mittels der Erfassungseinrichtung das Anliegen oder ein Lösen des wenigstens einen Sicherungsriemens unmittelbar, bspw. optisch im ersten Transportabschnitt detektierbar und im Zusammenwirken mit der zentralen Steuereinheit mittels der steuerbaren Antriebseinrichtung die Riemengeschwindigkeit im ersten Transportabschnitt geregelt anpassbar. Wie vorstehend genannt, kann die Erfassungseinheit auch irgendwo stromaufwärts angeordnet sein, so dass das Anliegen oder ein Lösen des wenigstens einen Sicherungsriemens indirekt in einer Steuereinheit aufgrund der Zustandsdaten im vorgelagerten Transportweg errechnet wird.

Der wesentliche Vorteil der erfindungsgemäßen Vorrichtung besteht darin, dass durch das Aufbringen von Vorschubkräften an einander gegenüberliegenden Seiten im Bereich der teilkreisförmigen, also kreissegmentförmigen, Transportstrecke ein Verdrehen des Behälters um dessen Behälterhochachse wirksam vermieden wird. Insbesondere wird dabei erfindungsgemäß die Riemengeschwindigkeit der Riemenanordnung abhängig vom Befüllungsgrad der teilkreisförmigen Transportstrecke mit Behältern an die Rotationsgeschwindigkeit des Transportsterns angepasst, ebenso wie die Länge des ersten und/zweiten Transportabschnittes des wirksamen Riemenabschnittes. Dies ist insbesondere beim Verkleben von Behältern untereinander mittels Klebepunkten von entscheidendem Vorteil, da durch eine verdrehsichere Überleitung an die Gruppierungseinrichtung sichergestellt wird, dass die Klebepunkte an der gewünschten Stelle zu liegen kommen bzw. exakt aufeinandertreffen. Des Weiteren erfolgt durch das Antreiben des wenigstens einen Sicherungsriemens eine aktive seitliche Führung der Behälter entlang der gesamten teilkreisförmigen Transportstrecke, mittels der ein Reiben des Behälters beispielsweise an einem nicht bewegten Geländer bzw. einer sonstigen passiven seitlichen Führung und damit Beschädigungen an empfindlichen Behälteroberflächen, beispielsweise Etiketten, Bedruckungen etc. wirksam vermieden werden.

Vorteilhaft kann dabei vorgesehen sein, dass der wenigstens eine Sicherungsriemen zumindest im Bereich des wirksamen Riemenabschnittes zur Einleitung einer Vorschubkraft auf die jeweilige Außenmantelfläche der Behälter ausgebildet ist.

Vorteilhaft kann dabei vorgesehen sein, dass der erste und/oder zweite Transportabschnitt des wirksamen Riemenabschnittes eine abhängig von der Anzahl der entlang der teilkreisförmigen Transportstrecke beförderten Behälter variable Länge aufweist, derart, dass der wirksame Riemenabschnitt durch einen der beiden Transportabschnitte allein und/oder durch eine Kombination des ersten und des zweiten Transportabschnittes ausbildbar ist.

Vorteilhaft kann dabei vorgesehen sein, dass in einem Leerlaufzustand der teilkreisförmigen Transportstrecke der wirksame Riemenabschnitt von dem ersten Transportabschnitt gebildet ist, wobei der erste Transportabschnitt an dem Transportstern anliegend mit einer der Rotationsgeschwindigkeit synchronen Riemengeschwindigkeit mittels der steuerbaren Antriebseinrichtung antreibbar ist, die einer Umfangsgeschwindigkeit des Transportsterns in einem ersten Radius entspricht.

Vorteilhaft kann dabei vorgesehen sein, dass während des Befüllens der teilkreisförmigen Transportstrecke mit Behälter der wirksame Riemenabschnitt durch eine Kombination des ersten Transportabschnittes mit dem zweiten Transportabschnitt gebildet ist, die mit einer der Rotationsgeschwindigkeit synchronen Riemengeschwindigkeit mittels der steuerbaren Antriebseinrichtung antreibbar sind, die einer Umfangsgeschwindigkeit des Transportsterns (4) in dem ersten Radius entspricht.

Vorteilhaft kann dabei vorgesehen sein, dass mittels der dynamischen Riemenspeichereinheit für die erforderliche partielle Erhöhung der Riemengeschwindigkeit des wenigstens einen Sicherungsriemens die Riemenlänge des wirksamen Riemenabschnittes wenigstens im Bereich des zweiten Transportabschnittes zumindest während des Befüllens der teilkreisförmigen Transportstrecke mit Behälter dynamisch einstellbar ist.

Vorteilhaft kann dabei vorgesehen sein, dass die Steuereinheit dazu ausgebildet ist, die Antriebseinrichtung derart anzusteuern, dass mittels der Antriebseinrichtung zum Zeitpunkt des Abhebens des wenigstens einen Sicherungsriemens im Bereich des ersten Transportabschnittes ein radialer Geschwindigkeitsanteil des wirksamen Riemenabschnittes ausgleichbar ist.

Vorteilhaft kann dabei vorgesehen sein, dass in einem vollständig befüllten Zustand der teilkreisförmigen Transportstrecke mit Behältern der wirksame Riemenabschnitt von dem zweiten Transportabschnitt gebildet ist, der mit einer der Rotationsgeschwindigkeit synchronen Riemengeschwindigkeit mittels der steuerbaren Antriebseinrichtung antreibbar ist, die einer Umfangsgeschwindigkeit des Transportsterns in einem dritten Radius entspricht.

Diese Ausführungsform kann auch umgekehrt erfolgen, indem unmittelbar mittels einer Antriebseinheit eine partiell erhöhte Riemengeschwindigkeit eingeleitet wird und parallel die Konstanthaltung der Riemengeschwindigkeit in dem anderen Transport- oder Riemenabschnitt über die Lageveränderung der dynamischen Riemenspeichereniheit erfolgt.

Dabei kompensiert in analoger Weise dann auch die dynamische Riemenspeichereniheit durch Lageveränderung die Geschwindigkeitsänderung in dem Riemen- oder Transportabschnitt, wenn der Sicherungsriemen von der Oberfläche oder Oberflächenbereichen abhebt und somit ein Nachspannen des Sicherungsriemens erforderlich ist.

Unter Behälter im Sinne der Erfindung werden sämtliche Packmittel verstanden, insbesondere Flaschen, Dosen etc.

Unter dem Begriff "Führungsband" werden segmentierte und nicht-segmentierte Bänder, insbesondere auch Gliederbänder verstanden.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
- Fig. 1: beispielhaft eine gemäß dem Stand der Technik ausgebildete Behälterbehandlungsmaschine umfassend mehrere Behandlungsmodule und einer daran anschließenden Behandlungseinheit in einer schematischen Draufsichtdarstellung;
- Fig. 2: beispielhaft eine schematische Funktionsdarstellung des Leerlaufzustandes der erfindungsgemäßen Vorrichtung zum lagestabilen Transport von Behältern;
- Fig. 3: beispielhaft eine schematische Funktionsdarstellung der erfindungsgemäßen Vorrichtung zum lagestabilen Transport von Behältern während des Befüllens mit Behältern;
- Fig. 4: beispielhaft eine schematische Funktionsdarstellung der erfindungsgemäßen Vorrichtung zum lagestabilen Transport von Behältern zum Zeitpunkt des vollständigen Abhebens des wenigstens einen Sicherungsriemens von dem Transportstern;
- Fig. 5: beispielhaft eine schematische Funktionsdarstellung der erfindungsgemäßen Vorrichtung zum lagestabilen Transport von Behältern im Produktionszustand mit vollgefahrenem Transportstern;
- Fig. 6: beispielhaft eine schematische Funktionsdarstellung der erfindungsgemäßen Vorrichtung zum lagestabilen Transport von Behältern mit lückenhaft vollgefahrenem Transportstern.
- Fig. 7: beispielhaft eine alternative Ausführung der erfindungsgemäßen Vorrichtung zu der Ausführung nach Fig. 1 bis 6.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

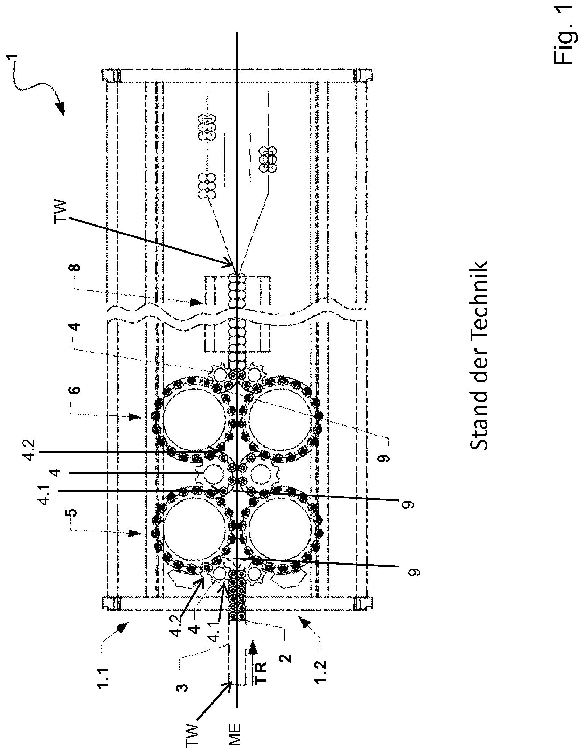

Figur 1 zeigt eine gemäß dem Stand der Technik ausgebildete Behälterbehandlungsvorrichtung 1, wie sie insbesondere aus der DE 10 2012 100 084 A1 bekannt geworden ist. Beispielsweise handelt es sich bei der Behälterbehandlungsvorrichtung 1 um eine Vorrichtung zur Herstellung von mehrreihigen Gebinden aus Behältern 2 durch Verkleben der Behälter 2 untereinander. Jedoch ist die Erfindung keineswegs auf eine derartige Behälterbehandlungsvorrichtung 1 beschränkt, sondern lässt sich in einer Vielzahl von Behälterbehandlungsvorrichtungen 1 implementieren, bei denen eine seitliche Führung von in einer Transportrichtung bewegten Behältern 2 entlang einer teilkreisförmigen, also bogenförmigen, Transportstrecke erforderlich ist. Die gezeigte Behälterbehandlungsvorrichtung 1 ist zur zeitgleichen Verarbeitung zweier einspuriger Behälterströme ausgebildet. Sie ist beispielsweise spiegelsymmetrisch oder im Wesentlichen spiegelsymmetrisch zu einer in Figur 1 horizontal verlaufenden Mittelebene ME ausgebildet und weist zwei gegenläufig arbeitende Verarbeitungsbereiche 1.1, 1.2 auf. Im Folgenden wird lediglich der Aufbau bzw. die Funktionsweise des ersten Verarbeitungsbereichs 1.1 beschrieben, wobei selbiges in analoger Weise für den zweiten Verarbeitungsbereich 1.2 gilt. Es versteht sich, dass die Erfindung auch in Behälterbehandlungsvorrichtungen 1 anwendbar ist, die lediglich zur Verarbeitung eines einzigen einreihigen Behälterstroms ausgebildet ist.

Die Behälter 2 werden beispielsweise stehend, also mit einer vertikalen Behälterhochachse, in einer Transportrichtung TR über einen Transporteur 3 einem Behältereinlauf 4.1 eines Transportsterns 4, der insbesondere als Einlaufstern ausgebildet ist, zugeführt. An den Transportstern 4 in Transportrichtung TR anschließend werden die Behälter 2 über einen Behälterauslauf 4.2 an eine oder mehrere Behälterbehandlungsmodule 5, 6 übergeben, die jeweils ein um eine vertikale Achse rotativ angetriebenes Transportelement, beispielsweise einen Rotor umfassen. Zwischen dem Behältereinlauf 4.1 und dem Behälterauslauf 4.2 bildet der Transportstern 4 eine teilkreisförmige, also bogenförmige, Transportstrecke aus. Beispielsweise kann ein erstes Behälterbehandlungsmodul 5 ein Ausrichtmodul sein, bei dem die Behälter nach einem Behältermerkmal ausgerichtet werden, und das zweite Behälterbehandlungsmodul 6 kann ein Verschließmodul sein, in dem die noch offenen Behälter 2 verschlossen werden.

Alternativ kann das zweite Behälterbehandlungsmodul 6 ein Modul sein, durch das ein Klebemittelauftrag auf die Behälteraußenfläche erfolgt, um nachfolgend Gruppen von Behältern 2 durch Klebeverbindungen miteinander zu verbinden und dadurch Behältergebinde zu bilden. Zwischen den Behälterbehandlungsmodulen 5, 6 kann ein weiterer Transportstern 4, der insbesondere als Übergabestern ausgebildet ist, vorgesehen sein. Auch diesem Transportstern 4 werden die Behälter 2 über einen Behältereinlauf 4.1 von dem ersten Behälterbehandlungsmodul 5 kommend zugeführt, im Transportstern 4 über eine teilkreisförmige Transportstrecke zu einem Behälterauslauf 4.2 befördert und von dort an das zweite Behälterbehandlungsmodul 6 übergeben.

Anschließend werden die Behälter 2 nach einem Durchlaufen des zweiten Behälterbehandlungsmoduls 6 dem nochmals weiteren Transportstern 4, der insbesondere als Auslaufstern ausgebildet ist, zugeführt, der die Behälter 2 an eine weitere Behandlungseinheit 8 weiterleitet. Dabei ist auch dieser Transportstern 4 analog den beiden anderen Transportsternen aufgebaut und umfasst damit insbesondere einen Behältereinlauf 4.1, einen Behälterauslauf 4.2 sowie einen zwischen dem Behältereinlauf 4.1 und dem Behälterauslauf 4.2 ausgebildete teilkreisförmige Transportstrecke. Die Behandlungseinheit 8 ist beispielsweise eine Gruppierungseinrichtung, in der Behältergebinde umfassend zumindest zwei Behälterreihen gebildet werden. In der Behandlungseinheit 8 erfolgt dabei vorzugsweise ein linearer Transport der Behälter 2, beispielsweise durch ein Förderband oder eine Förderkette, wohingegen die Behälter 2 im Bereich der Behandlungsmodule 5, 6 auf einer zumindest abschnittsweise bogenförmigen Behältertransportstrecke, insbesondere eine mehrfach umgelenkten Behältertransportstrecke bewegt werden.

Die Übergabe der Behälter 2 von der jeweils teilkreisförmigen Transportstrecke im Bereich der Behandlungsmodule 5, 6 zur linearen Behältertransportstrecke im Bereich der Behandlungseinheit 8 kann auf unterschiedliche Weise erfolgen. In dem Ausführungsbeispiel gemäß Figur 1 sind mehrere Transportsterne 4 mit jeweils mehreren umfangsseitig verteilt vorgesehenen Ausnehmungen, auch Behältertaschen genannt, vorgesehen, wobei die jeweils entlang der entsprechenden teilkreisförmigen Transportstrecke zu transportierenden Behälter 2 zumindest abschnittsweise jeweils in einer Ausnehmung aufgenommen sind und durch Rotation des entsprechenden Transportsterns 4 entlang der jeweiligen teilkreisförmigen Transportstrecke weiterbewegt werden. Um ein radiales Ausweichen der Behälter 2 entlang der jeweiligen teilkreisförmigen Transportstrecke aus den Ausnehmungen heraus zu vermeiden, ist in bekannten Vorrichtungen abschnittsweise um den entsprechenden Transportstern 4 herum eine Behälterführung in Form eines Geländers 9 vorgesehen. Die Behälter 2 werden an diesem Geländer 9 gleitend radial geführt. Dabei wird die Bewegungsrichtung der Behälter 2 beispielsweise in einem Bereich zwischen 90° und 130° verändert und die Behälter 2 werden damit der linearen Transportstrecke im Bereich der Behandlungseinheit 8 geeignet zugeführt. Insbesondere wird damit in der Behälterbehandlungsmaschine 1 von den jeweiligen Behältern 2 zwischen dem Transportstern 3 und der Behandlungseinheit 8 ein in Transportrichtung TR verlaufender Transportweg TW durchlaufen.

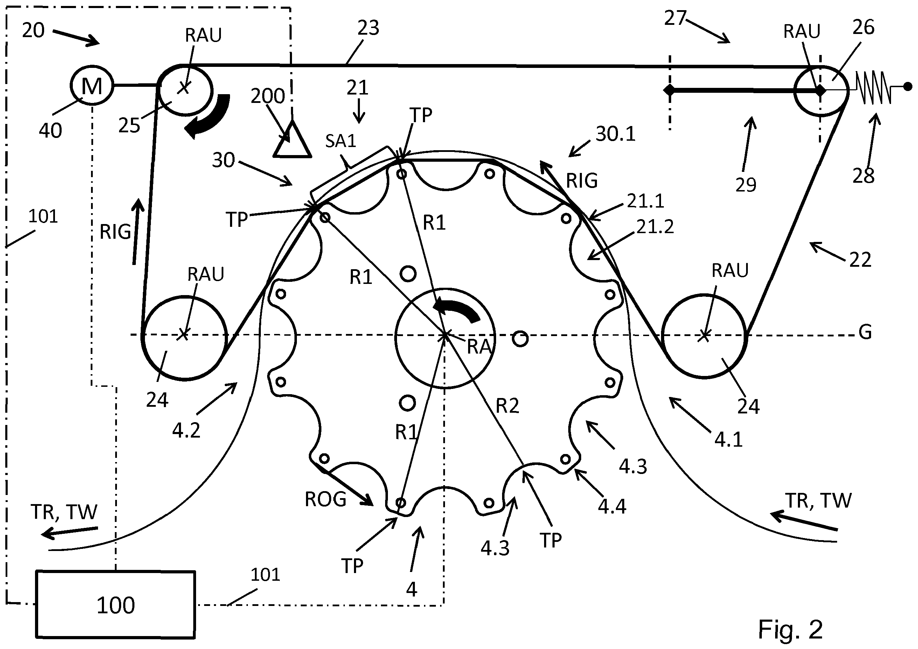

Figur 2 zeigt beispielhaft eine Ausführungsvariante einer erfindungsgemäßen Vorrichtung 20 zum lagestabilen Transport von Behältern 2 entlang einer teilkreisförmigen Transportstrecke 21 zwischen dem Behältereinlauf 4.1 und dem Behälterauslauf 4.2, bei dem die teilkreisförmige Transportstrecke 21 von einem Transportstern 4 mit mehreren Ausnehmungen 4.3 zur Aufnahme der Behälter 2 und einer Riemenanordnung 22 mit zumindest einem endlos umlaufend angetriebenen Sicherungsriemen 23 gebildet ist. Insbesondere kann es sich bei dem Transportstern 4 um einen Einlauf-, einen Auslauf- und/oder einen Übergabestern gemäß der Verwendung in Figur 1 an einer Behälterbehandlungsvorrichtung 1 handeln. Im Detail ist die in Figur 2 gezeigte beispielhafte Vorrichtung 20 zur Ausführung des erfindungsmäßen Verfahrens zum lagestabilen Transport von Behältern 2 entlang einer teilkreisförmigen Transportstrecke 21 zwischen dem Behältereinlauf 4.1 und dem Behälterauslauf 4.2 eingerichtet bzw. ausgebildet. Insbesondere kann dabei vorgesehen sein, dass die teilkreisförmige Transportstrecke 21 eine Teilstrecke des Transportweges TW ausbildet, entlang dessen die jeweiligen Behälter 2 in der Transportrichtung TR transportiert werden können.

Ferner kann der Transportstern 4 hierfür um eine Rotationsachse RA in Transportrichtung TR, vorliegend linksdrehen, endlos drehbar angetrieben werden. Beispielweise kann der Transportstern 4 mit einer konstanten oder näherungsweise konstanten Rotationsgeschwindigkeit ROG mittels einer nicht näher dargestellten Antriebseinrichtung, insbesondere einem Servomotorantrieb, während des Betriebs des Transportsterns 4 angetrieben werden. Dabei kann die Rotationsgeschwindigkeit ROG mittels einer zentralen Steuereinheit 100, die beispielweise als Bestandteil einer zentralen Maschinensteuerung ausgebildet sein kann, gesteuert und/oder geregelt ausgebildet sein. Die Steuereinheit 100 steht hierfür mit der nicht näher dargestellten Antriebseinrichtung des Transportsterns 4 beispielweise über zumindest eine Steuerungsleitung 101 in Wirkverbindung.

An seinem Außenumfang weist der Transportstern 4 mehrere taschenartige Ausnehmungen 4.3 zur Aufnahme jeweils eines Behälters 2 auf. Die Ausnehmungen 4.3 sind dabei in identischen oder näherungsweise identischen Winkelabständen um die Rotationsachse RA am Außenumfang des Transportsterns 4 vorgesehen und beispielweise jeweils teilkreisförmig ausgebildet. Besonders bevorzugt bilden die mehreren teilkreisförmigen Ausnehmungen 4.3 jeweils eine identische oder näherungsweise identische Kreisbogenlänge sowie einen identischen oder näherungsweise identischen Mittelpunktwinkel aus. Zwischen jeweils zwei benachbarten Ausnehmungen 4.3 sind am Transportstern 4 zudem jeweils vorzugsweise abgeflachte Sternspitzen 4.4 vorgesehen. Die jeweiligen Sternspitzen 4.4. liegen mit ihrem auf die Rotationsachse RA bezogenen Tangentialpunkt TP auf einem gedachten Kreis und weisen somit in ihrem auf der gedachten Kreislinie liegenden Tangentialpunkt TP einen identischen oder näherungsweise identischen ersten Radius R1 zur Rotationsachse RA auf. Die mehreren teilkreisförmigen Ausnehmungen 4.3 weisen in ihrem der Rotationsachse RA am nähersten zugewandten Tangentialpunkt TP, also der kürzest möglichen Wegstrecke zwischen der Rotationsachse RA und der jeweiligen teilkreisförmigen Ausnehmung 4.3, ebenfalls jeweils einen identischen oder näherungsweise identischen zweiten Radius R2 zur Rotationsachse RA auf.

Die Vorrichtung 20 umfasst weiterhin die Riemenanordnung 22 mit dem zumindest einen endlos umlaufenden, schleifenartigen Sicherungsriemen 23. Der wenigstens eine Sicherungsriemen 23 ist dabei dazu ausgebildet, auf die Außenmantelfläche der Behälter 2 eine Vorschubkraft einzuleiten. Hierfür kann der wenigstens eine Sicherungsriemen 23 beispielweise aus einem flexiblen Material gebildet sein, das insbesondere einen Gummianteil, beispielsweise ein Gummigewebe, enthält. Dabei ist das Material des Sicherungsriemens idealerweise derart, dass die Riemenlänge unter Zugbelastung nicht oder nur minimal veränderlich ist.

Die teilkreisförmige Transportstrecke 21 erstreckt sich hierbei in Transportrichtung TR zwischen dem Behältereinlauf 4.1 und dem Behälterauslauf 4.2 des Transportsterns 4 und bildet damit insbesondere eine Teilstrecke des Transportweges TW aus. Eine Außenseite 21.1 der teilkreisförmigen Transportstrecke 21 wird durch den wenigstens einen Sicherungsriemen 23 der Riemenanordnung 22 und eine Innenseite 21.2 durch die im Bereich zwischen dem Behältereinlauf 4.1 und dem Behälterauslauf 4.2 jeweils entlang der teilkreisförmigen Transportstrecke 21 rotationsabhängig in der jeweiligen Winkelposition des Transportsterns 4 eingreifenden Ausnehmungen 4.3 begrenzt, bzw. definiert. Die Innenseite 21.2 der teilkreisförmigen Transportstrecke 21 kann sich dabei insbesondere teilumfänglich der Außenseite des Transportsterns 4 erstrecken und bevorzugt näherungsweise halbkreisförmig ausgebildet sein.

Die Riemenanordnung 22 kann dabei starre oder gelagerte Umlenkelemente aufweisen, insbesondere wenigstens zwei Umlenkrollen 24, wenigstens eine Antriebsrolle 25 sowie zumindest eine Riemenspeicherrolle 26 aufweisen mittels denen der wenigstens eine Sicherungsriemen 23 endlos umlaufend geführt ausgebildet ist. Den entsprechenden Umlenkrollen 24, der Antriebsrolle 25 sowie der Riemenspeicherrolle 26 ist jeweils eine Rotationsachse RAU zugeordnet, um die die entsprechenden Rollen drehbar gelagert sind. Im vorliegenden Ausführungsbeispiel umfasst die Riemenordnungen 22 zwei Umlenkrollen 24, mittels denen der wenigstens eine Sicherungsriemen 23 entlang der teilkreisförmigen Transportstrecke 21 geführt wird, und zwar derart, dass der wenigstens eine Sicherungsriemen 23 zur Lagestabilisierung der Behälter 2 beispielsweise teilumfänglich mit dem Transportstern 4 in Wirkverbindung steht.

Ferner ist die wenigstens eine Antriebsrolle 25 über eine mit der Antriebsrolle 25 in Wirkverbindung stehende Antriebseinrichtung 40, die insbesondere als Servomotorantrieb ausgebildet sein kann, gesteuert und/oder geregelt antreibbar. Hierfür steht die Antriebeinrichtung 40 ihrerseits mit der Steuereinheit 100 beispielweise über zumindest eine Steuerleitung 101 in Wirkverbindung. Die Steuereinheit 100 ist somit insbesondere zum Regeln und/oder Steuern wenigstens einer Riemengeschwindigkeit RIG, RIG1 oder RIG2 ausgebildet, so dass letztlich über die steuerbare Antriebseinrichtung 40 mittels der wenigstens einen antreibbaren Antriebsrolle 25 der wenigstens eine Sicherungsriemen 23 mit einer gesteuerten und/oder geregelten Riemengeschwindigkeit RIG, RIG1 oder RIG2 beaufschlagbar ist, also angetrieben werden kann. Die Riemengeschwindigkeit RIG, RIG1 oder RIG2 ist dabei über die der Antriebsrolle 25 zugeordneten Antriebseinrichtung 40 variabel einstellbar und zwar insbesondere gesteuert und/oder geregelt angepasst an die Rotationsgeschwindigkeit ROG des Transportsterns 4, was nachfolgend noch nähergehend erläutert wird. Die Drehrichtung des wenigstens einen Sicherungsriemens 23 ist dabei insbesondere gegensinnig bzw. gegengerichtet zur Drehrichtung des Transportsterns 4 ausgebildet.

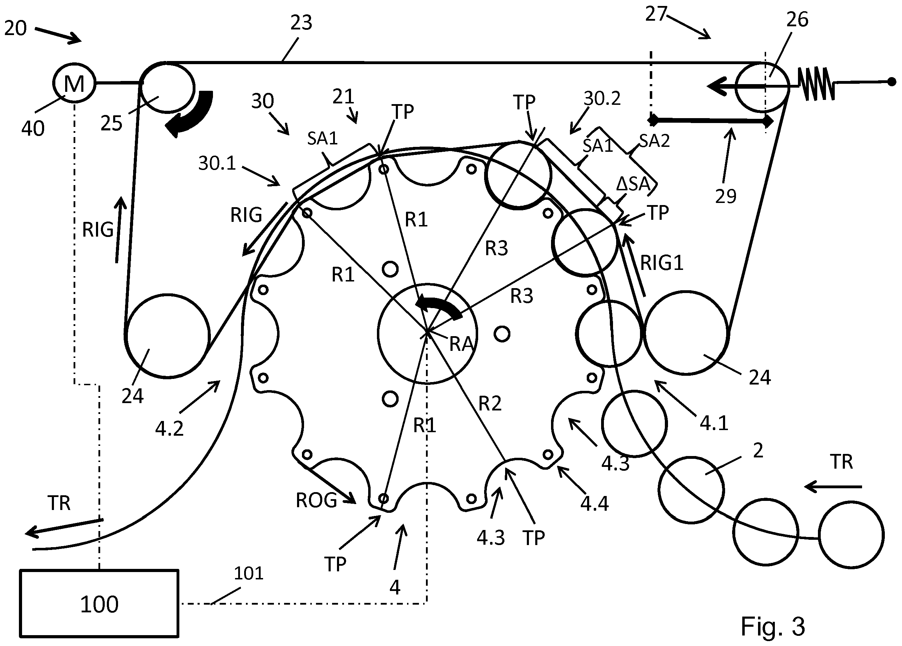

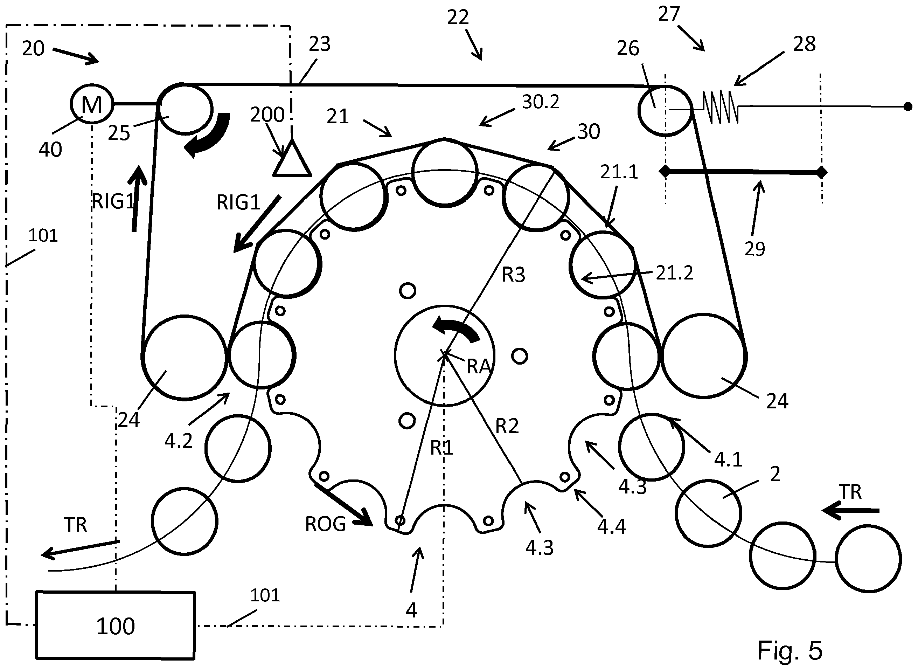

Weiterhin wird erfindungsgemäß mittels des wenigstens einen Sicherungsriemens 23 im Bereich der teilkreisförmigen Transportstrecke 21 ein wirksamer Riemenabschnitt 30 mit zumindest einem ersten Transportabschnitt 30.1 und/oder einem zweiten Transportabschnitt 30.2 ausgebildet. Es ist dabei vorgesehen, dass der erste Transportabschnitt 30.1 durch den Teilabschnitt des wirksamen Riemenabschnittes 30 gebildet ist, in dem keine Behälter 2 in den Ausnehmungen 4.3 des Transportsterns 4 aufgenommen sind, während der zweite Transportabschnitt 30.2 durch den Teilabschnitt des wirksamen Riemenabschnittes 30 gebildet ist, in welchem Behälter 2 in den Ausnehmungen 4.3 des Transportsterns 4 vorgesehen sind. Die Länge des ersten und/oder zweiten Transportabschnittes 30.1 bzw. 30.2 ist dabei in Abhängigkeit der Anzahl der entlang der teilkreisförmigen Transportstrecke 21 beförderten Behälter 2 variabel ausgebildet, so dass der wirksame Riemenabschnitt 30 durch einen der beiden Transportabschnitte 30.1, 30.2 alleine oder durch eine Kombination wenigstens des ersten mit dem zweiten Transportabschnitt 30.1 und 30.2 ausbildbar ist. Insbesondere passiert dies in Abhängigkeit eines Befüllungsgrades der teilkreisförmigen Transportstrecke 21 mit Behältern 2, nämlich einem Leerlaufzustand, dargestellt in Figur 2, einem teilweise befüllten Zustand, gezeigt in Figur 3, sowie einem vollständig befüllten Zustand, gezeigt in Figur 5.

Es kann dabei vorgesehen sein, dass der wirksame Riemenabschnitt 30 des wenigstens einen Sicherungsriemens 23 im Bereich des ersten Transportabschnittes 30.1 in Berührungskontakt an den Sternspitzen 4.4 des Transportsterns 4 anliegt, während der wirksame Riemenabschnitt 30 im Bereich des zweiten Transportabschnittes 30.2 an der Außenmantelfläche der entsprechenden Behälter 2 anliegt. Wie insbesondere aus Figur 3 ersichtlich, wird durch den jeweiligen Tangentialpunkt TP in dem der wirksame Riemenabschnitt 30 im Bereich des zweiten Transportabschnittes 30.2 an der jeweiligen Außenmantelfläche der entsprechenden Behälter 2 anliegt, ein dritter Radius R3 definiert, der also aus einer Summe des zweiten Radius R2 mit dem Durchmesser eines in der Transportstrecke 21 befindlichen Behälters 2 gebildet ist.

Insbesondere ist dabei über den an der jeweiligen Außenmantelfläche des entsprechenden Behälters 2 in Berührungskontakt stehenden Kontaktabschnitt des zweiten Transportabschnittes 30.2 eine Vorschubkraft auf die Außenmantelfläche der jeweiligen in der teilkreisförmigen Transportstrecke 21 befindlichen Behälter 2 einleitbar, indem der wenigstens eine Sicherungsriemen 23 zumindest im Bereich des wirksamen Riemenabschnittes 30 mit einer zu der Rotationsgeschwindigkeit ROG des Transportsterns 4 synchron ausbildbaren Riemengeschwindigkeit RIG, RIG1, RIG2 angetrieben wird. Somit kann es entlang der teilkreisförmigen Transportstrecke 21 zu keiner Verdrehung der Behälter 2 um ihre entsprechende Behälterhochachse kommen.

Erfindungsgemäß ist hierfür eine dynamische Riemenspeichereinheit 27 vorgesehen, die eine zur lagestabilen Zuführung der teilkreisförmigen Transportstrecke 21 mit Behälter 2 im zweiten Transportabschnitt 30.2 sich abhängig von der Anzahl im zweiten Transportabschnitt 30.2 befindlichen Behälter 2 erforderliche partielle Erhöhung der Riemengeschwindigkeit RG1 ausgleicht, was nähergehend in der Beschreibung zu Figur 3 erläutert wird.

Hierfür ist der dynamischen Riemenspeichereinheit 27 die wenigstens eine weitere Riemenspeicherrolle 26 zugeordnet, mittels der die Riemenlänge für die erforderliche partielle Erhöhung der Riemengeschwindigkeit RG1des wenigstens einen Sicherungsriemens 23 zumindest im Bereich des zweiten Transportabschnitt 30.2 des wirksamen Riemenabschnittes 30 dynamisch einstellbar ist.

Weiterhin ist die wenigstens eine Riemenspeicherrolle 26 der dynamischen Riemenspeichereinheit 27 unter einer Vorspannung, die beispielweise über eine Zugfeder 28 bereitgestellt wird, sowohl drehbar gelagert aufgenommen, als auch linear, beispielweise entlang eines schienenartigen Stellweges 29, verstellbar ausgebildet. Als Alternative könnte statt einer Zugfeder auch ein Pneumatikzylinder vorgesehen werden. Zudem wird über die mittels der Riemenspeichereinheit 27 unter einer Vorspannkraft stehende Riemenspeicherrolle 26 auch der wenigstens eine Sicherungsriemen 23 vorgespannt, derart, dass zumindest über den an der jeweiligen Außenmantelfläche des entsprechenden Behälters 2 in Berührungskontakt stehenden Kontaktabschnitt des zweiten Transportabschnittes 30.2 eine Vorschubkraft auf die Außenmantelfläche der jeweiligen in der teilkreisförmigen Transportstrecke 21 befindlichen Behälter 2 einleitbar ist.

Somit kann über die dynamische Riemenspeichereinheit 27 ein Sicherungsriemenpuffer ausgebildet werden, mittels dem abhängig von dem Befüllungsgrad der teilkreisförmigen Transportstrecke 21 mit Behältern 2 die Länge des zweiten Transportabschnittes 30.2 und somit die dem zweiten Transportabschnitt 30.2 zuordnete Riemenlänge des wirksamen Riemenabschnittes 30 des wenigstens einen Sicherungsriemens 23 dynamisch veränderbar ist, indem die Riemenspeicherrolle 26 entlang des Stellweges 29 entgegen einer Vorspannkraft verfahren wird, so dass damit eine partielle Änderung der Riemengeschwindigkeit RG1 im Bereich des zweiten Transportabschnittes 30.2 einstellbar ist. Insbesondere wird sich hierbei des Zusammenhangs der zurückgelegten Wegstrecke pro festgelegter Zeiteinheit bedient, die eine eindeutige Geschwindigkeit definiert. Durch die dynamische Zugabe von Riemenlänge mittels der Riemenspeichereinheit 27 wird die zurückgelegte Wegstrecke eines Tangentialpunktes TP mit dem dritten Radius 3 eines im zweiten Transportabschnittes 30.2 aufgenommenen Behälters 2 bei identischer Zeiteinheit verlängert und somit die Geschwindigkeit partiell erhöht.

Insbesondere kann dafür die wenigstens eine Riemenspeicherrolle 26 der dynamischen Riemenspeichereinheit 27 entlang des Stellweges 29 entgegen der Federkraft der Zugfeder 28 dynamisch verfahren, also derart ausgelenkt werden, dass damit die Länge zumindest des zweiten Transportabschnittes 30.2 des wirksamen Riemenabschnittes 30 abhängig von der Anzahl der entlang der teilkreisförmigen Transportstrecke 21 transportierten Behälter 2 zum lagestabilen Transport der Behälter 2 derart angepasst wird, dass der wenigstens eine Sicherungsriemen 23 zumindest in dem in der Länge angepassten zweiten Transportabschnitt 30.2 eine gegenüber der Riemengeschwindigkeit RIG erhöhte Riemengeschwindigkeit RIG1 aufweist.

Die Führung des wenigstens einen Sicherungsriemens 23 entlang der teilkreisförmigen Transportstrecke 21 wird über wenigstens zwei weitere Umlenkrollen 24 bereitgestellt, die sich beidseitig des Transportsterns 4 angeordnet befinden. Insbesondere befinden sich die beiden Umlenkrollen 24 mit ihrer jeweiligen Rotationsachse RAU in einem identischen Abstand zur Rotationsachse RA des Transportsterns 4 angeordnet, also vorzugsweise spiegelsymmetrisch zur Rotationsachse RA. Auch können die Rotationsachsen RAU der beiden Umlenkrollen 24 sowie die Rotationsachse RA des Transportsterns 4 auf einer Geraden G angeordnet sein. Es kann dabei vorgesehen sein, dass der wirksame Riemenabschnitt 30 des wenigstens einen Sicherungsriemens 23 jeweils durch den Riemenabschnitt gebildet ist, der sich in Abhängigkeit der aktuellen Riemengeschwindigkeit RIG zu einem definierten Zeitpunkt zwischen dem Behältereinlauf 4.1 und dem Behälterauslauf 4.2 befindet, und zwar insbesondere der Riemenabschnitt, der zu einem definierten Zeitpunkt auf der jeweils der Rotationsachse RA zugewandten Seite mit der imaginären Geraden G zwischen dem Behältereinlauf 4.1 und dem Behälterauslauf 4.2 geschnitten wird.

Ferner weist die Vorrichtung erfindungsgemäß eine Erfassungseinrichtung 200 zur Erfassung, beispielweise optischen Erfassung, der Behälter 2 im Transportweg TW und/oder des radialen und/oder winkelmäßigen Verlaufes des wenigstens einen Sicherungsriemens 23 im Bereich des wirksamen Riemenabschnittes 30, insbesondere im Bereich des ersten und/oder zweiten Transportabschnittes 30.1, 30.2, rauf. Die Erfassungseinrichtung 200 steht dabei insbesondere mit der zentralen Steuereinheit 100 in Wirkverbindung und ist hierfür dazu eingerichtet, ein Lösen, also Abheben, des wenigstens einen Sicherungsriemens 23 von dem Transportstern 4, insbesondere den Sternspitzen 4.4, im Bereich des ersten Transportabschnitt 30.1 zu detektieren. Insbesondere beschränkt sich die Erfassung der Behälter 2 nicht auf den durch die teilkreisförmige Transportstrecke 21 gebildeten Transportweg TW. Vielmehr ist im Rahmen der vorliegenden Erfindung auch angedacht, eine Erfassung der Behälter 2 in dem der teilkreiskreisförmigen Transportstrecke 21 in Transportrichtung TR vorgelagerten Abschnitten des Transportweges TW durchzuführen. Bei der Erfassungseinrichtung 200 zur Erfassung des radialen und/oder winkelmäßigen Verlauf des wenigstens einen Sicherungsriemens 23 im Bereich des wirksamen Riemenabschnittes 30 kann es sich eine aus dem Stand der Technik bekannte Erfassungseinrichtung 200 handeln.

Besonders vorteilhaft ist dabei die Erfassungseinrichtung 200 als optische Erfassungseinrichtung ausgebildet und derart angeordnet, dass mittels der Erfassungseinrichtung 200 im ersten Transportabschnitt 30.1 vorhandene Behälter 2, der wenigstens eine Sicherungsriemen 23 sowie der in diesem Bereich mit dem wenigstens einem Sicherungsriemen 23 in Wirkverbindung stehende drehwinkelabhängige Abschnitt des Transportsterns 4, insbesondere dessen Sternspitzen 4.4, erfassbar sind. Somit kann mittels der Erfassungseinrichtung 200 ein Abheben des wenigstens eine Sicherungsriemens 23 von den Sternspitzen im Bereich des ersten Transportabschnittes 30.1 erfasst, bzw. detektiert werden.

Insbesondere zeigt die Figur 2 dabei den Leerlaufzustand, in dem sich in der teilkreisförmigen Transportstrecke 21 keine Behälter 2 aufgenommen, bzw. angeordnet befinden. Hierbei liegt der wirksame Riemenabschnitt 30 entlang der teilkreisförmigen Transportstrecke 21 insbesondere mit seinem ersten Transportabschnitt 30.1 an dem Transportstern 4, insbesondere an dessen Sternspitzen 4.4, an - steht also mit den Sternspitzen 4.4 in Berührungskontakt. Einen zweiten Transportabschnitt 30.2 bildet der wirksame Riemenabschnitt 30 in dem Leerlaufzustand nicht aus, so dass der gesamte wirksame Riemenabschnitt 30 von dem ersten Transportabschnitt 30.1 gebildet ist. Dabei bildet der erste Transportabschnitt 30.1 des wirksamen Riemenabschnittes 30 in einem jeweiligen Tangentialpunkt TP mit dem Radius R1 zwischen zwei benachbarten Sternspitzen 4.4 einen ersten Sehnenabschnitt SA1 aus. Der wenigstens eine Sicherungsriemens 23 wird im Leerlaufzustand mittels der steuerbaren Antriebseinrichtung 40 mit einer Riemengeschwindigkeit RIG angetrieben, die der Rotationsgeschwindigkeit ROG des Transportsterns 4 entspricht, jedoch gegensinnig dazu verläuft, und zwar derart, dass es im Bereich des ersten Transportabschnittes 30.1 des wirksamen Riemenabschnittes 30 der teilkreisförmigen Transportstrecke 21 zu keiner Relativbewegung bzw. Relativverschiebung zwischen den Sternspitzen 4.4. des Transportsterns 4 sowie dem wenigstens einem an den Sternspitzen 4.4 anliegenden Sicherungsriemen 23 kommt. Insbesondere wird damit im Bereich der teilkreisförmigen Transportstrecke 21 ein synchroner Gleichlauf des wirksamen Riemenabschnittes 30 des wenigstens einen Sicherungsriemens 23 mit dem Transportstern 4, insbesondere dessen Sternspitzen 4.4 ausgebildet.

Mithin ist damit im Leerlaufzustand der wenigstens eine Sicherungsriemen 23 der Sicherungsriemenanordnung 22 mit einer an die Rotationsgeschwindigkeit ROG entsprechend synchron angepassten Riemengeschwindigkeit RIG angetrieben, wobei die Riemengeschwindigkeit RIG einer Umfangsgeschwindigkeit des Transportsterns 4 entspricht, die dieser in einem Tangentialpunkt TP mit dem Radius R1 aufweist. Damit ist die Riemengeschwindigkeit RIG identisch oder näherungsweise identisch der Rotationsgeschwindigkeit ROG ausgebildet und überdies definiert in einer Abhängigkeit zu der Umfangsgeschwindigkeit eines Tangentialpunktes TP mit dem Radius R1 des mit einer definierbaren Rotationsgeschwindigkeit ROG angetriebenen Transportsterns 4. Dabei gilt es zu beachten, dass zwar der Transportstern 4 mit einer beispielweise näherungsweise konstanten Rotationsgeschwindigkeit ROG angetrieben wird, dass aber die jeweilige Umfangsgeschwindigkeit, bzw. Umdrehungsgeschwindigkeit abhängig von dem jeweiligen Radius des entsprechenden Tangentialpunktes TP unterschiedlich schnell ausgebildet ist. Hierbei ist bei konstanter Rotationsgeschwindigkeit ROG des Transportsterns 4 die Umfangsgeschwindigkeit des Tangentialpunktes TP mit dem Radius R1 schneller ausgebildet, als die Umfangsgeschwindigkeit des Tangentialpunktes TP mit dem Radius R2.

Ferner befindet sich die der Riemenspeichereinheit 27 zugeordnete Riemenspeicherrolle 24 im Leerlaufzustand in einer nicht ausgelenkt, jedoch mittels der Zugfeder 28 vorgespannten, Position.

In Figur 3 ist dabei die Vorrichtung 20 während des Befüllens mit Behältern 2 gezeigt, wobei die teilkreisförmige Transportstrecke 21 erst teilweise mit Behältern 2 befüllt ist. Insbesondere wird während dieser Befüllungsphase der teilkreisförmigen Transportstrecke 21 mit Behältern 2 der wenigstens eine Sicherungsriemen 23 der Riemenanordnung 22 weiterhin mit der der Rotationsgeschwindigkeit ROG entsprechenden Riemengeschwindigkeit RIG betrieben, die der Umfangsgeschwindigkeit des Transportsterns 4 entspricht, die dieser in einem Tangentialpunkt TP mit dem Radius R1 aufweist.

Dabei liegt der wirksame Riemenabschnitt 30 entlang der teilkreisförmigen Transportstrecke 21 insbesondere mit seinem ersten Transportabschnitt 30.1 an dem Transportstern 4, insbesondere an dessen Sternspitzen 4.4, an - steht also mit den Sternspitzen 4.4 in Berührungskontakt, während der zweite Transportabschnitt 30.2 des wirksamen Riemenabschnitt 30 mit der jeweiligen Außenmantelfläche des entsprechenden Behälters 2 in Berührungskontakt steht. Insbesondere verschieben sich die gegenseitigen Längenverhältnisse des ersten und zweiten Transportabschnittes 30.1, 30.2 während des Befüllens in Abhängigkeit der Anzahl der entlang der teilkreisförmigen Transportstrecke 21 transportierten Behälter 2, derart, dass sich der erste Transportabschnitt 30.1 in seiner Länge verkürzt, während sich die zweite Transportabschnitt 30.2 verlängert.

Mithin bildet der zweite Transportabschnitt 30.2 des wirksamen Riemenabschnittes 30 in einem jeweiligen Tangentialpunkt TP mit dem dritten Radius R3 zwischen zwei benachbarten Tangentialpunkten TP in diesem zweiten Transportabschnitt 30.2 einen zweiten Sehnenabschnitt SA2 aus, der insbesondere um einen Sehnendifferenzabschnitt ΔSA länger ausgebildet ist als der erste Sehnenabschnitt SA1. Die jeweilige Länge des entsprechenden Sehnendifferenzabschnittes ΔSA entspricht dabei dem Längenabschnitt, um den die Riemenabspeichereinheit 27 beim Einlaufen des jeweiligen Behälters 2 in den wirksamen Riemenabschnitt 30 den zweiten Transportabschnitt 30.2 dynamisch verlängert. Diese Verlängerung erfolgt dabei insbesondere über die dynamische Verschiebung der Riemenspeicherrolle 26 entlang des Stellweges 29 entgegen der Vorspannkraft. Durch die dynamische Längenpassung der Länge des wirksamen Riemenabschnittes 30 mittels der Riemenspeichereinheit 27 stellt sich damit im Bereich des zweiten Transportabschnittes 30.2 eine gegenüber der Riemengeschwindigkeit RIG partiell erhöhte Riemengeschwindigkeit RIG1 während des Befüllens der teilkreisförmigen Transportstrecke 21 ein, die somit insbesondere größer ausgebildet ist als die Riemengeschwindigkeit RIG im ersten Transportabschnitt 30.1. In anderen Worten wird also zur lagestabilen Zuführung der teilkreisförmigen Transportstrecke 21 mit Behälter 2 im zweiten Transportabschnitt 30.2 die sich abhängig von der Anzahl im zweiten Transportabschnitt 30.2 befindlichen Behälter 2 erforderliche partielle Erhöhung der Riemengeschwindigkeit RIG1, nämlich partiell im Bereich des zweiten Transportabschnittes 30.2, mittels der dynamischen Riemenspeichereinheit 27 ausgeglichen, und zwar insbesondere derart, dass die hierfür notwendige zusätzliche Riemenlänge des wirksamen Riemenabschnittes 30 im Bereich des zweiten Transportabschnitt 30.2 bereitgestellt wird. Somit weist der wirksame Riemenabschnitt 30 im Bereich des ersten Transportabschnittes 30.1 eine Riemengeschwindigkeit RIG, die der Umfangsgeschwindigkeit des Transportstern 4 in dem Tangentialpunkt TP mit dem Radius R1 entspricht, während der wirksame Riemenabschnitt 30 in seinem zweiten Transportabschnitt 30.2 eine gegenüber der Riemengeschwindigkeit RIG partiell erhöhte Riemengeschwindigkeit RIG1 aufweist, die der Umfangsgeschwindigkeit des Transportstern 4 in dem Tangentialpunkt TP mit dem dritten Radius R3 entspricht.

Insbesondere erfolgt die dynamische Längenpassung der Länge des wirksamen Riemenabschnittes 30 mittels der Riemenspeichereinheit 27 zu dem Zeitpunkt, wenn der entlang des Transportweges TW in Transportrichtung TR transportierte Behälter 2 über den Behältereinlauf 4.1 in die teilkreisförmige Transportstrecke 21 gefördert wird und mit seiner Außenmantelfläche mit dem wirksamen Riemenabschnitt 30 der zweiten Transportstrecke 30.2 in Berührungskontakt gelangt.

Es wird also während des Befüllens der teilkreisförmigen Transportstrecke 21 mit Behältern 2 die Länge des wirksamen Riemenabschnittes 30 abhängig von der Anzahl der entlang der teilkreisförmigen Transportstrecke 21 transportierten Behälter 2 zum lagestabilen Transport der Behälter 2 derart angepasst, dass es im Bereich des wirksamen Riemenabschnittes 30 der teilkreisförmigen Transportstrecke 21 zu keiner Relativbewegung bzw. Relativverschiebung zwischen den Sternspitzen 4.4. des Transportsterns 4 und dem wenigstens einen Sicherungsriemen 23 im Bereich des ersten Transportabschnitt 30.1, als auch in den jeweiligen Berührungskontaktabschnitten der Außenmantelflächen der jeweiligen Behälter 2 mit dem wenigstens einen Sicherungsriemen 23 im Bereich des zweiten Transportabschnitt 30.2 kommt.

Insbesondere wird der lagestabile Transport der Behälter 2 entlang der teilkreiskreisförmigen Transportstrecke 21 sichergestellt, indem der in der Länge des wirksamen Riemenabschnittes 30 angepasste sowie an der jeweiligen Außenmantelfläche der Behälter 2 in den Berührungskontaktabschnitten anliegende zweite Transportabschnitt 30.2 eine Vorschubkraft auf die Außenmantelfläche der jeweiligen Behälter 2 einleitet.

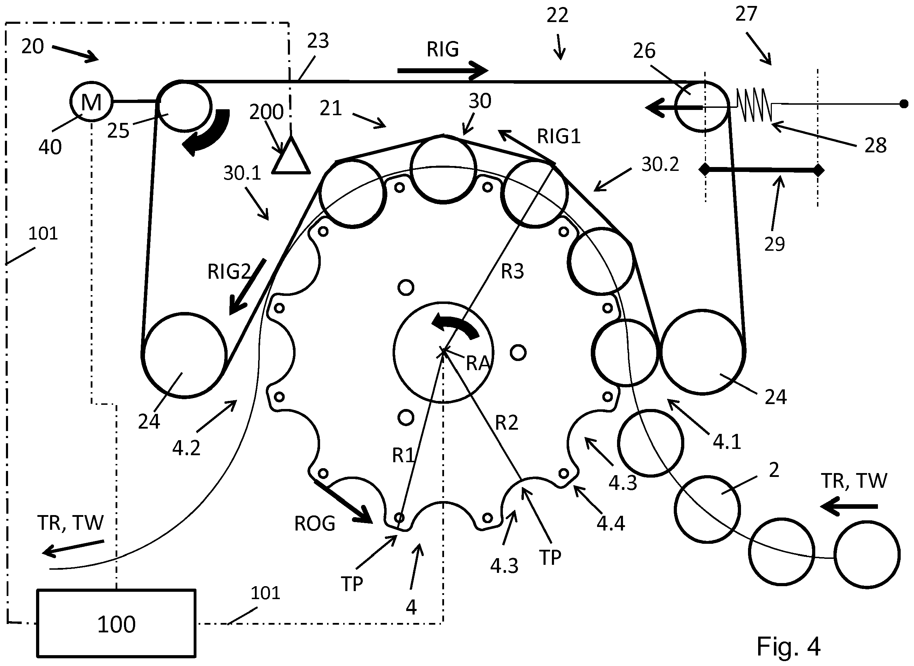

Figur 4 zeigt die Vorrichtung 20 zu dem Zeitpunkt während des Befüllens der teilkreisförmigen Transportstrecke 21 mit Behältern 2, zu dem sich der wenigstens eine Sicherungsriemen 23 vollständig von dem Transportstern 4 abhebt, sich somit insbesondere von sämtlichen Sternspitzen 4.4 löst. Insbesondere löst sich dabei der wenigstens eine Sicherungsriemen 23 im Bereich des ersten Transportabschnittes 30.1 des wirksamen Riemenschnittes 30. Es ist dabei vorgesehen, dass der Zeitpunkt des Lösens des wenigstens einen Sicherungsriemens 23 im Bereich des ersten Transportabschnittes 30.1 mittels der Erfassungsreinrichtung 200 beispielweise optisch detektiert wird und im Zusammenwirken mit der zentralen Steuereinheit 100 mittels der steuerbaren Antriebseinrichtung 40 die Riemengeschwindigkeit RIG zumindest im ersten Transportabschnitt 30.1 geregelt angepasst wird.

Hierbei gilt es zu berücksichtigen, dass bis zu diesem Zeitpunkt des Lösens des wenigstens einen Sicherungsriemens 23 von dem Transportstern 4 die Riemenanordnung 22 mittels der steuerbaren Antriebseinrichtung 40 mit einer Riemengeschwindigkeit RIG betrieben wird, die der Umfangsgeschwindigkeit des Transportsterns 4 in seinem Tangentialpunkt TP mit dem Radius R1 entspricht.

Durch das Abheben des wenigstens einen Sicherungsriemens 23 von den Sternspitzen 4.4 erhöht sich die Riemengeschwindigkeit RIG in einem von den Sternspitzen 4.4 abgehobenen Bereich des ersten Transportabschnittes 30.1 um den radialen Geschwindigkeitsanteil, der durch das radiale, also von der Rotationsachse RA weggerichtete Abheben des wenigstens einen Sicherungsbandes 23 von den Sternspitzen 4.4 entsteht, auf eine gegenüber der Riemengeschwindigkeit RIG in erhöhte Riemengeschwindigkeit RIG2.

Die Steuereinheit 100 ist dabei dazu ausgebildet, die Antriebseinrichtung 40 derart anzusteuern, dass zum Zeitpunkt des Abhebens des wenigstens einen Sicherungsriemens 23 im Bereich des ersten Transportabschnittes 30.1 der radiale Geschwindigkeitsanteil ausgeglichen wird, indem die Antriebseinrichtung 40 den wenigstens einen Sicherungsriemen 23 auf eine gegenüber der Riemengeschwindigkeit RIG um den radiale Geschwindigkeitsanteil erhöhte Riemengeschwindigkeit RIG2 beschleunigt.

Ab dem Zeitpunkt des Abhebens des wenigstens einen Sicherungsriemens 23 von den Sternspitzen 4.4 wird dabei mittels der steuerbaren Antriebseinrichtung 40 die Riemengeschwindigkeit RIG auf die Riemengeschwindigkeit RIG1 beschleunigt, die der Umfangsgeschwindigkeit des Transportsterns 4 in dem Tangentialpunkt TP mit dem dritten Radius R3 entspricht. Hierbei gilt der Zusammenhang Riemengeschwindigkeit RIG kleiner als Riemengeschwindigkeit RIG2 kleiner als Riemengeschwindigkeit RIG1.

Zudem erfolgt eine weitergehende Längenanpassung der benötigen Weglänge des wirksamen Riemenabschnittes 30 mittels der Riemenspeichereinheit 27 wie oben stehend nähergehend beschrieben.

Figur 5 zeigt die Vorrichtung 20 in einem vollständig befüllten Zustand der teilkreisförmigen Transportstrecke 21 mit Behältern 2. Die Riemenspeichereinheit 27 ist hierbei zur Freigabe der benötigten Länge des wirksamen Riemenabschnittes 30 vollständig entgegen der Vorspannung der Zugfeder 28 ausgelenkt. Der wenigstens eine Sicherungsriemen 23 ist zu diesem Zeitpunkt zumindest im Bereich des wirksamen Riemenabschnittes 30 bereits auf die erhöhte Riemengeschwindigkeit RIG1 mittels der steuerbaren Antriebseinrichtung 40 beschleunigt, die der Umfangsgeschwindigkeit des Transportsterns 4 in dem Tangentialpunkt TP mit dem dritten Radius R3 entspricht.

Eine Absenkung, also Verlangsamung, der erhöhten Riemengeschwindigkeit RIG1 auf die Riemengeschwindigkeit RIG, die Umfangsgeschwindigkeit des Transportsterns 4 entspricht, die dieser in einem Tangentialpunkt TP mit dem Radius R1 aufweist, erfolgt erst nach einem vollständigem Leerlaufen der teilkreisförmigen Transportstrecke 21, also zu einem Zeitpunkt, wenn keine Behälter 2 mehr in der teilkreisförmigen Transportstrecke 21 enthalten sind.

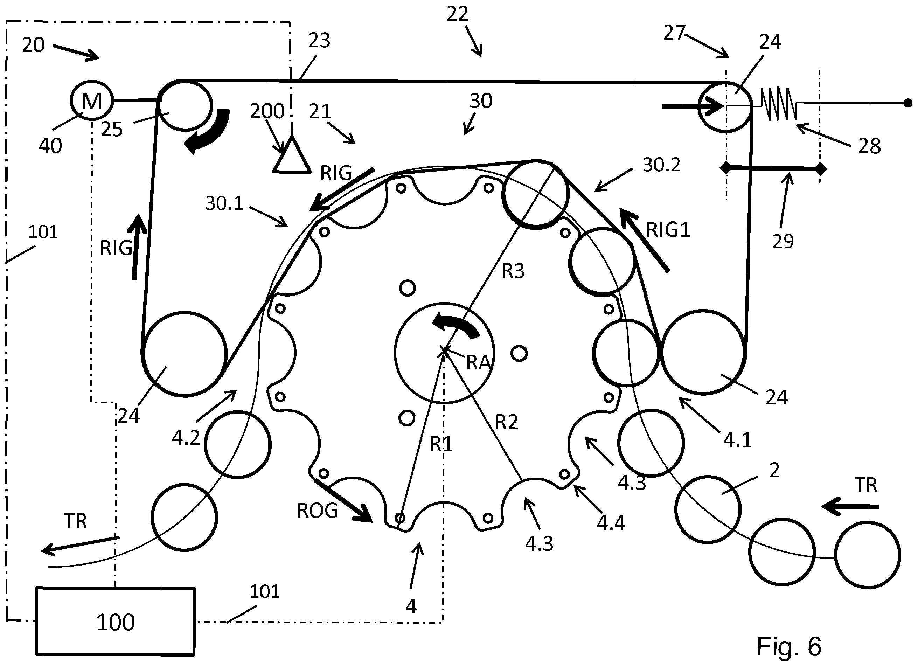

Figur 6 zeigt die Vorrichtung 20 in einem teilweise befüllten Zustand der teilkreisförmigen Transportstrecke 21, bei dem der Behälterstrom zwischen Behältereinlauf 4.1 und 4.2 kurzzeitig unterbrochen bzw. abgerissen ist, sodass mehrere Ausnehmungen 4.3 des Transportsterns 4 entlang der teilkreisförmigen Transportstrecke 21 unbefüllt sind. Insbesondere ist hierbei vorgesehen, dass zu dem Zeitpunkt, sobald die erste unbefüllte Ausnehmung 4.3 des Transportsterns 4 den Behälterauslauf 4.2 erreicht, die erhöhte Riemengeschwindigkeit RIG1 mittels der steuerbaren Antriebseinrichtung 40 von einer an die der Umfangsgeschwindigkeit des Transportsterns 4 in dem Tangentialpunkt TP mit dem dritten Radius R3 angepassten Umfangsgeschwindigkeit auf die Riemengeschwindigkeit RIG zu reduzieren bzw. anzupassen, die der Umfangsgeschwindigkeit des Transportsterns 4 entspricht, die dieser in einem Tangentialpunkt TP mit dem Radius R1 aufweist.

Ein Abhängig vom Befüllungsgrad der teilkreisförmigen Transportstrecke 21 mit Behältern 2 auftretendes Abheben des wenigstens einen Sicherungsriemens 23 von den Sternspitzen 4.4 und damit eine sich in dem abgehobenen Abschnitt 30.3 um den radialen Geschwindigkeitsanteil erhöhende Riemengeschwindigkeit RIG2 wird mittels der steuerbaren Antriebseinrichtung 40 in der oben beschriebenen Art und Weise ausgeglichen bzw. angepasst.

Die hierfür benötige Längenanpassung der benötigen Weglänge des wirksamen Riemenabschnittes 30 wird mittels der Riemenspeichereinheit 27 in der vorstehend beschrieben Art und Weise vorgenommen.

Vorteilhaft kann weiterhin vorgesehen sein, dass zu dem Zeitpunkt, wenn die erste befüllte Ausnehmung 4.3 des Transportsterns 4 den Behälterauslauf 4.2 erreicht, die Riemengeschwindigkeit RIG von einer an die Umfangsgeschwindigkeit des Transportsterns 4 in einem Tangentialpunkt TP mit dem Radius R1 angepassten Umfangsgeschwindigkeit auf die erhöhte Riemengeschwindigkeit RIG1 beschleunigt wird, die der Umfangsgeschwindigkeit des Transportsterns 4 in dem Tangentialpunkt TP mit dem dritten Radius R3 entspricht.

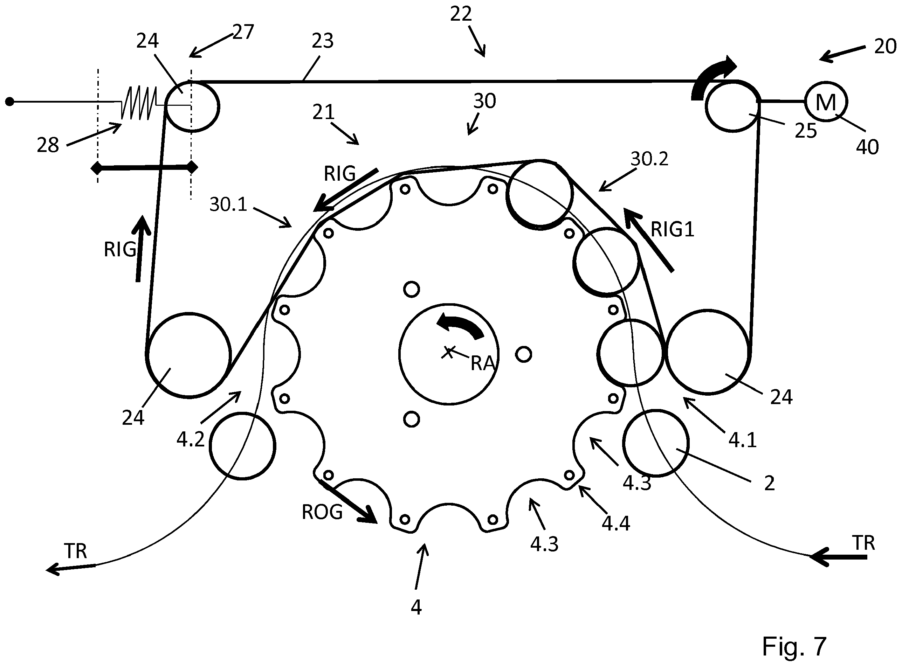

In Figur 7 ist eine invertierte Lösung gezeigt, bei welcher der Unterschied zu den vorherigen Ausführungsformen darin besteht, dass der Antrieb 25 und die dynamische Riemenspeichereniheit 27 in ihrer Position getauscht sind. Alle vorherigen Elemente verbleiben und Funktionen erfolgen wie beschrieben, nur dass bei dieser Ausführungsform eine erhöhte Riemengeschwindigkeit im zweiter Transportabschnitt 30.2 unmittelbar über die Antriebseinheit 25 geregelt veranlasst wird und gleichzeitig die Konstanthaltung der Riemengeschwindigkeit im ersten Transportabschnitt 30.1 über die Lageveränderung der dynamischen Riemenspeichereniheit 27 erfolgt.

In analoger Weise kompensiert auch die dynamische Riemenspeichereniheit 27 durch Lageveränderung die Geschwindigkeitsänderung im ersten Transportabschnitt 30.1, wenn der Sicherungsriemen 23 von der Oberfläche oder Oberflächenbereichen abhebt.

In einer weiteren, nicht gezeigten Ausführungsform ist die Riemenspeicherrolle 26 gem. der Figuren der dynamischen Riemenspeichereinheit als steuer- und regelbare Antriebseinheit ausgebildet, wobei weiterhin mindestens zwei, idealerweise drei zusätzliche Umlenkrollen vorgesehen werden.

Die dynamische Riemenspeichereinheit ist vorstehend mit einer Umlenkrolle darstellte, wobei natürlich auch zwei oder mehr Umlenkrollen und geeignete Lagerrungen von einer oder mehreren Umlenkrollen vorgesehen werden kann.

Die Erfindung wurde voranstehend an Ausführungsbeispielen beschrieben, wobei für alle Ausführungsformen gilt, es müssen mindestens drei Umlenkungen des Sicherungsriemens 23 erfolgen. Es versteht sich, dass eine Vielzahl von Änderungen oder Abwandlungen möglich sind, ohne dass dadurch der der Erfindung zugrundeliegende Erfindungsgedanke verlassen wird.

### Bezugszeichenliste

- 1: Behälterbehandlungsvorrichtung
- 1.1, 1.2: Verarbeitungsbereich
- 2: Behälter
- 3: Transporteur
- 4: Transportstern
- 4.1: Behältereinlauf
- 4.2: Behälterauslauf
- 4.3: Ausnehmung
- 4.4: Sternspitze
- 5,6: Behandlungsmodul
- 8: Behandlungseinheit
- 9: Geländer

- 20: Vorrichtung
- 21: teilkreisförmige Transportstrecke
- 21.1: Außenseite
- 21.2: Innenseite
- 22: Riemenanordnung
- 23: Sicherungsriemen
- 24: Umlenkrolle
- 25: Antriebsrolle
- 26: Riemenspeicherrolle
- 27: Riemenspeichereinheit
- 28: Zugfeder
- 29: Stellweg
- 30: wirksamer Riemenabschnitt
- 30.1: erster Transportabschnitt
- 30.2: zweiter Transportabschnitt
- 40: Antriebseinrichtung

- 100: Steuereinheit
- 101: Steuerleitung
- 200: Erfassungseinrichtung

- RA: Rotationsachse Transportstern
- RIG..RIG2: Riemengeschwindigkeit
- ROG: Rotationsgeschwindigkeit
- R1: erster Radius
- R2: zweiter Radius,
- R3: dritter Radius
- RAU: Rotationsache
- TP: Tangentialpunkt
- ME: Mittelebene
- TR: Transportrichtung
- TW: Transportweg
- G: Gerade
- SA1: erster Sehnenabschnitt
- SA2: zweiter Sehnenabschnitt
- ΔSA: Sehnendifferenzabschnitt

## Patentansprüche

1. Vorrichtung zum lagestabilen Transport von Behältern (2) entlang einer teilkreisförmigen Transportstrecke (21) zwischen einem Behältereinlauf (4.1) und einem Behälterauslauf (4.2),
umfassend eine zentrale Steuereinheit (100), einen um eine Rotationsachse (RA) in Transportrichtung (TR) mit einer Rotationsgeschwindigkeit (ROG) antreibbaren Transportstern (4) mit mehreren an seinem Außenumfang vorgesehenen Ausnehmungen (4.3) zur Aufnahme der Behälter (2) sowie wenigstens eine Riemenanordnung (22) mit zumindest einem endlos umlaufenden Sicherungsriemen (23), der mittels einer steuerbaren Antriebseinrichtung (40) mit zumindest einer Riemengeschwindigkeit (RIG, RIG1, RIG2) antreibbar ist, sowie weiter aufweisend eine mit der Riemenanordnung (22) zusammenwirkende dynamische Riemenspeichereinheit (27),
wobei der Transportstern (4) zur Lagestabilisierung der Behälter (2) zumindest im Bereich der teilkreisförmigen Transportstrecke (21) mit dem wenigstens einen Sicherungsriemen (23) in Wirkverbindung steht,
wobei mittels des wenigstens einen Sicherungsriemens (23) im Bereich der teilkreisförmigen Transportstrecke (21) hierfür ein wirksamer Riemenabschnitt (30) mit zumindest einem ersten Transportabschnitt (30.1) in welchem keine Behälter (4) in den Ausnehmungen (4.3) aufgenommen sind und/oder einem zweiten Transportabschnitt (30.2) in welchem Behälter (2) in den Ausnehmungen (4.3) aufgenommen sind ausbildbar sind, **dadurch gekennzeichnet, dass** die Vorrichtung dazu eingerichtet ist, den wenigstens einen Sicherungsriemen (23) zumindest im Bereich des wirksamen Riemenabschnittes (30) mit einer zu der Rotationsgeschwindigkeit (ROG) des Transportsterns (4) synchron ausbildeten Riemengeschwindigkeit (RIG, RIG1, RIG2) anzutreiben, indem zur lagestabilen Zuführung der teilkreisförmigen Transportstrecke (21) mit Behälter (2) entweder im zweiten Transportabschnitt (30.2), die sich abhängig von der Anzahl im zweiten Transportabschnitt (30.2) befindlichen Behälter (2) erforderliche partielle Erhöhung der Riemengeschwindigkeit (RIG1) mittels der dynamischen Riemenspeichereinheit (27) ausgleichbar ist, und wobei ein Lösen des wenigstens einen Sicherungsriemens (22) von der Oberfläche des Transportsterns im ersten Transportabschnitt (30.1) und die damit verbundene Geschwindigkeitsänderung in Laufrichtung des Sicherungsriemens (22) und im Zusammenwirken mit der zentralen Steuereinheit (100) mittels der steuerbaren Antriebseinrichtung (40) die Riemengeschwindigkeit (RIG, RIG1, RIG2) im ersten Transportabschnitt (30.1) geregelt anpassbar ist,
- oder indem im zweiten Transportabschnitt (30.2), die sich abhängig von der Anzahl im zweiten Transportabschnitt (30.2) befindlichen Behälter (2) erforderliche partielle Erhöhung der Riemengeschwindigkeit (RIG1) mittels der geregelten Antriebseinrichtung (40) und im Zusammenwirken mit der zentralen Steuereinheit (100) und der vorlaufenden dynamischen Riemenspeichereinheit (27) anpassbar ist, und wobei ein Lösen des wenigstens einen Sicherungsriemens (22) von der Oberfläche des Transportsterns im ersten Transportabschnitt (30.1) und die damit verbundene Geschwindigkeitsänderung in Laufrichtung des Sicherungsriemens (22) mittels der dynamischen Riemenspeichereinheit (27) die Riemengeschwindigkeit (RIG, RIG1, RIG2) im ersten Transportabschnitt (30.1) ausgleichbar ist,
wobei die Vorrichtung eine Erfassungseinrichtung (200) zur Erfassung von Behältern (2) im Transportweg und/oder des radialen und/oder winkelmäßigen Verlaufes des Sicherungsriemens (23) im Bereich des wirksamen Riemenabschnittes (30) und insbesondere des ersten und zweiten Transportabschnittes (30.1, 30.2) aufweist, und wobei mittels der Erfassungseinrichtung (200) die Anlage an und/oder das Lösen des wenigstens einen Sicherungsriemens (22) von der Oberfläche oder Oberflächenbereichen im ersten Transportabschnitt (30.1) erfassbar und/oder berechenbar ist und weiterhin für die Steuerung der Antriebseinrichtung (40) und/oder der dynamischen Riemenspeichereinheit (27) nutzbar ist.

2. Vorrichtung nach Anspruch 1, **dadurch gekennzeichnet, dass** der wenigstens eine Sicherungsriemen (23) zumindest im Bereich des wirksamen Riemenabschnittes (30) zur Einleitung einer radialen in Richtung der Rotationsachse (RA) wirkenden Kraft auf die jeweilige Außenmantelfläche der Behälter (2) ausgebildet ist ohne Vorschubkraft in Umfangsrichtung.

3. Vorrichtung nach Anspruch 1 oder 2, **dadurch gekennzeichnet, dass** der erste und/oder zweite Transportabschnitt (30.1, 30.2) des wirksamen Riemenabschnittes (30) eine abhängig von der Anzahl der entlang der teilkreisförmigen Transportstrecke (21) beförderten Behälter (2) variable Länge aufweist, derart, dass der wirksame Riemenabschnitt (30) durch einen der beiden Transportabschnitte (30.1, 30.2) allein und/oder durch eine Kombination des ersten und des zweiten Transportabschnittes (30.1, 30.2) ausbildbar ist.

4. Vorrichtung nach einem der vorhergehenden Ansprüche 1 bis 3, **dadurch gekennzeichnet, dass** in einem Leerlaufzustand der teilkreisförmigen Transportstrecke (21) der wirksame Riemenabschnitt (30) von dem ersten Transportabschnitt (30.1) gebildet ist, wobei der erste Transportabschnitt (30.1) an der Oberfläche des Transportsterns (4) mindestens bereichsweise anliegend mit einer der Rotationsgeschwindigkeit (ROG) synchronen Riemengeschwindigkeit (RIG) mittels der steuerbaren Antriebseinrichtung (40) antreibbar ist, die einer Umfangsgeschwindigkeit des Transportsterns (4) in einem ersten Radius (R1) entspricht.

5. Vorrichtung nach einem der vorhergehenden Ansprüche 1 bis 4, **dadurch gekennzeichnet, dass** während des Befüllens der teilkreisförmigen Transportstrecke (21) mit Behälter (2) der wirksame Riemenabschnitt (30) durch eine Kombination des ersten Transportabschnittes (30.1) mit dem zweiten Transportabschnitt (30.2) gebildet ist, die mit einer der Rotationsgeschwindigkeit (ROG) synchronen Riemengeschwindigkeit (RIG) mittels der steuerbaren Antriebseinrichtung (40) antreibbar sind, die einer Umfangsgeschwindigkeit des Transportsterns (4) in dem ersten Radius (R1) entspricht.

6. Vorrichtung nach einem der vorhergehenden Ansprüche 1 bis 5, **dadurch gekennzeichnet, dass** direkt mittels der dynamischen Riemenspeichereinheit (27) oder mittelbar im Zammenwirken mit der Antriebseinheit (4) für die erforderliche partielle Erhöhung der Riemengeschwindigkeit (RIG1) des wenigstens einen Sicherungsriemens (23) die Riemenlänge des wirksamen Riemenabschnittes (30) wenigstens im Bereich des zweiten Transportabschnittes (30.2) zumindest während des Befüllens der teilkreisförmigen Transportstrecke (21) mit Behälter (2) dynamisch einstellbar ist.

7. Vorrichtung nach einem der vorhergehenden Ansprüche 1 bis 6, **dadurch gekennzeichnet, dass** die Steuereinheit (100) dazu ausgebildet ist, die Antriebseinrichtung (40) derart anzusteuern, dass mittels der Antriebseinrichtung (40) zum Zeitpunkt des Abhebens des wenigstens einen Sicherungsriemens (23) im Bereich des ersten Transportabschnittes (30.1) von der Oberfläche oder Oberflächenbereichen ein zur Rotationsaches (RA) radialer Geschwindigkeitsanteil des wirksamen Riemenabschnittes (30) ausgleichbar ist.

8. Vorrichtung nach einem der vorhergehenden Ansprüche 1 bis 7, **dadurch gekennzeichnet, dass** in einem vollständig befüllten Zustand der teilkreisförmigen Transportstrecke (21) mit Behältern der wirksame Riemenabschnitt (30) von dem zweiten Transportabschnitt (30.2) gebildet ist, der mit einer der Rotationsgeschwindigkeit (ROG) synchronen Riemengeschwindigkeit (RIG1) mittels der steuerbaren Antriebseinrichtung (40) antreibbar ist, die einer Umfangsgeschwindigkeit des Transportsterns (4) in einem dritten Radius (R3) entspricht.

9. Verfahren zum lagestabilen Transport von Behältern (2) entlang einer teilkreisförmigen Transportstrecke (21) zwischen einem Behältereinlauf (4.1) und einem Behälterauslauf (4.2), **dadurch gekennzeichnet, dass** die Behälter (2) mit einer Vorrichtung gemäß einem der vorhergehenden Ansprüche transportiert werden.

10. Verfahren nach Anspruch 9, **dadurch gekennzeichnet, dass** in einem Leerlaufzustand der zumindest eine Sicherungsriemen (23) entlang eines wirksamen Riemenabschnittes (30) an der Oberfläche oder Oberflächenbereichen des Transportsterns (4) anliegend mit einer der Rotationsgeschwindigkeit (ROG) synchronen Riemengeschwindigkeit (RIG) angetrieben wird.

11. Verfahren nach Anspruch 9 oder 10, **dadurch gekennzeichnet, dass** während des Befüllens der teilkreisförmigen Transportstrecke (21) mit Behältern (2) der wenigstens eine Sicherungsriemen (23) der Riemenanordnung (22) weiterhin mit der Rotationsgeschwindigkeit (ROG) synchron entsprechenden Riemengeschwindigkeit (RIG) betrieben wird, wobei die Länge zumindest über den zweiten Transportabschnitt (30.2) des wirksamen Riemenabschnittes (30) abhängig von der Anzahl der entlang der teilkreisförmigen Transportstrecke (21) transportieren Behälter (2) zum lagestabilen Transport der Behälter (2) mittels einer Riemenspeichereinheit (27) derart angepasst wird, dass der wenigstens eine Sicherungsriemen (23) zumindest in dem in der Länge angepassten zweiten Transportabschnitt (30.2) eine gegenüber der Riemengeschwindigkeit (RIG) partiell erhöhte Riemengeschwindigkeit (RIG1) aufweist.

12. Verfahren nach einem der vorhergehenden Ansprüche 9 bis 11, **dadurch gekennzeichnet, dass** nach einem vollständigen Lösen des zumindest einen Sicherungsriemens (23) von dem Transportstern (4) im Bereich des wirksamen Riemenabschnittes (30) zur Lagestabilisierung der Behälter (2) die Riemengeschwindigkeit (RIG) erhöht wird.

13. Verfahren nach einem der vorhergehenden Ansprüche 9 bis 12, **dadurch gekennzeichnet, dass** der wenigstens eine Sicherungsriemen (23) wenigstens im Leerlaufzustand mit einer der Rotationsgeschwindigkeit (ROG) derart entsprechenden Riemengeschwindigkeit (RIG) betrieben wird, dass zumindest im Bereich der teilkreisförmigen Transportstrecke (21) keine Relativbewegung zwischen dem Transportstern (4) sowie dem an dem Transportstern (4) in diesem Bereich anliegenden wirksamen Riemenabschnitt (30) entsteht.

14. Verfahren nach einem der vorhergehenden Ansprüche 9 bis 13, **dadurch gekennzeichnet, dass** der wenigstens eine Sicherungsriemen (23) im Leerlaufzustand mit einer Riemengeschwindigkeit (RIG) betrieben wird, die einer Umfangsgeschwindigkeit des Transportstern (4) in einem Tangentialpunkt (TP) mit einem Radius (R1) entspricht.

15. Verfahren nach einem der vorhergehenden Ansprüche 9 bis 14, **dadurch gekennzeichnet, dass** während des Befüllens der teilkreiskreisförmigen Transportstrecke (21) mit Behältern (2) der wenigstens eine Sicherungsriemen (23) weiterhin mit einer Riemengeschwindigkeit (RIG) betrieben wird, die einer Umfangsgeschwindigkeit des Transportstern (4) in einem Tangentialpunkt (TP) mit einem Radius (R1) entspricht.

16. Verfahren nach einem der vorhergehenden Ansprüche 9 bis 15, **dadurch gekennzeichnet, dass** wenigstens während des Befüllens der teilkreisförmigen Transportstrecke (21) mit Behältern (2) die Länge des wirksamen Riemenabschnittes (30) mittels der dynamischen Riemenspeichereinheit (27) für die erforderliche partielle Erhöhung der Riemengeschwindigkeit (RIG1) im Bereich des zweiten Transportabschnittes (30.2) dynamisch eingestellt wird.

17. Verfahren nach Anspruch 16, **dadurch gekennzeichnet, dass** wenigstens während des Befüllens der teilkreisförmigen Transportstrecke (21) mit Behältern (2) die Länge des wirksamen Riemenabschnittes (30) mittels der Antriebseinheit (25) im Zusammenwirken mit der dynamischen Riemenspeichereinheit (27) für die erforderliche partielle Erhöhung der Riemengeschwindigkeit (RIG1) im Bereich des zweiten Transportabschnittes (30.2) dynamisch eingestellt wird, indem über die Antriebseinheit (25) die Erhöhung und Anpassung der Riemengeschwindigkeit veranlasst und das Konstanthalten der Riemengeschwindigkeit (RIG) im ersten Transportabschnitt (30.1) über die Lageänderung der dynamischen Riemenspeichereinheit (27) erfolgt.

18. Verfahren nach einem der vorhergehenden Ansprüche 9 bis 17, **dadurch gekennzeichnet, dass** im vollständig befüllten Zustand der teilkreisförmigen Transportstrecke (21) der wenigstens eine Sicherungsriemen (23) mit einer Riemengeschwindigkeit (RIG1) betrieben wird, die der Umfangsgeschwindigkeit des Transportstern (4) in dem Tangentialpunkt (TP) mit dem dritten Radius (R3) entspricht.

## Claims

1. Device for the positionally stable transport of containers (2) along a circular-segment shaped transport path (21) between a container entrance (4.1) and a container exit (4.2),
comprising a central control unit (100), a transport star (4) which can be driven about a rotation axis (RA) in the transport direction (TR) at a rotation speed (ROG), with a plurality of recesses (4.3) provided at its outer circumference for receiving the containers (2) and at least one belt arrangement (22) with at least one endlessly encircling securing belt arrangement (23), which can be driven by means of a controllable drive device (40) with at least one belt speed (RIG, RIG1, RIG2), as well as comprising a dynamic belt storage unit (27) interacting with the belt arrangement (22),
wherein, for the position stabilisation of the containers (2), the transport star (4) is in operational connection, at least in the region of the circular-segment shaped transport path (21), with the at least one belt arrangement (23), wherein, by means of the at least one securing belt arrangement (23), in the region of the circular-segment shaped transport path (21), for this purpose an effective belt section (30) can be formed with at least one first transport section (30.1), in which no containers (4) are received in the recesses (4.3), and/or a second transport path (30.2), in which containers (2) are received in the recesses (4.3),
**characterised in that**
the device is configured so as to drive the at least one securing belt arrangement (23), at least in the region of the effective belt section (30) at a belt speed (RIG, RIG1, RIG2) which is adjusted such as to be synchronous with the rotation speed (ROG) of the transport star (4), **in that**, for the positionally stable feed of the circular-segment shaped transport path (21) with containers (2), either in the second transport section (30.2), the partial increase of the belt speed (RIG1), which is required depending on the number of containers (2) located in the second transport section (30.2), can be compensated by means of the dynamic belt storage unit (27), and wherein a detachment of the at least one securing belt arrangement (22) from the surface of the transport star in the first transport section (30.1), and the change of speed associated with this, in the direction of run of the securing belt arrangement (22) and in interaction with the central control unit (100), the belt speed (RIG, RIG1, RIG2) in the first transport section (30.1) can be adjusted in a regulated manner by means of the controllable drive device (40),
or **in that**, in the second transport path (30.2), the partial increase in the belt speed (RIG1), required depending on the number of containers (2) present in the second transport path (30.2), can be adjusted by means of the regulated drive device (40) and in the interaction with the central control unit (100) and the dynamic belt storage unit (27), and wherein a detachment of the at least one securing belt arrangement (22) from the surface of the transport star in the first transport section (30.1), and the change of speed associated with this, in the direction of run of the securing belt arrangement (22), can be compensated by means of the dynamic belt storage unit (27), the belt speed (RIG, RIG1, RIG2) can be compensated in the first transport path (30.1), wherein the device comprises a detection device (200) for the detection of containers (2) in the transport path and/or of the radial and/or angular course of the securing belt arrangement (23) in the region of the effective belt section (30) and in particular of the first and second transport path (30.1, 30.2), and wherein, by means of the detection device (200), the contact and/or detachment of the at least one securing belt arrangement (22) in relation to the surface or surface regions in the first transport path (30.1) can be detected and/or calculated, and can further be used for the controlling of the drive device (40) and/or the dynamic belt storage unit (27).

2. Device according to claim 1, **characterised in that** the at least one securing belt arrangement (23) is configured, at least in the region of the effective belt section (30), such as to initiate a force taking effect in the direction of the rotation axis (RA) onto the respective outer casing surface of the containers (2), without a thrust force in the circumferential direction.

3. Device according to claim 1 or 2, **characterised in that** the first and/or second transport sections (30.1, 30.2) of the effective belt section (30) exhibit a variable length which is dependent on the number of the containers (2) being conveyed along the circular-segment shaped transport path (21), in such a way that the effective belt section (30) can be formed by one of the two transport sections (30.1, 30.2) alone and/or by a combination of the first and the second transport sections (30.1, 30.2).

4. Device according to any one of the preceding claims 1 to 3, **characterised in that**, in an idling state of the circular-segment shaped transport path (21), the effective belt section (30) is formed from the first transport section (30.1), wherein the first transport section (30.1), in contact at least in some areas on the surface of the transport star (4), can be driven at a belt speed (RIG) which is synchronous with the rotation speed (ROG), by means of the controllable drive device (40), which corresponds to the circumferential speed of the transport star (4) in a first radius (R1).

5. Device according to any one of the preceding claims 1 to 4, **characterised in that**, during the filling of the circular-segment shaped transport path (21) with containers (2), the effective belt section (30) is formed by a combination of the first transport path (30.1) with the second transport path (30.2), which can be driven at a belt speed (RIG) which is synchronous with the rotation speed (ROG) by means of the controllable drive device (40), which corresponds to a circumferential speed of the transport star (4) in the first radius (R1).

6. Device according to any one of the preceding claims 1 to 5, **characterised in that**, directly by means of the dynamic belt storage unit (27), or indirectly in interaction with the drive unit (4), for the required partial increase in the belt speed (RIG1) of the at least one securing belt arrangement (23), the belt length of the effective belt section (30) can be dynamically adjusted at least in the region of the second transport path (30.2), at least during the filling of the circular-segment shaped path (21) with containers (2).

7. Device according to any one of the preceding claims 1 to 6, **characterised in that** the control unit (100) is configured in such a way as to actuate and control the drive device (40) in such a way that, by means of the drive device (40), at the moment of the raising of the at least one securing belt arrangement (23), in the region of the first transport section (30.1), from the surface or surface regions, a speed portion of the effective belt section (30) radial to the rotation axis (RA) can be compensated.

8. Device according to any one of the preceding claims 1 to 7, **characterised in that**, in a completely filled state of the circular-segment shaped transport path (21) with containers, the effective belt section (30) is formed from the second transport section (30.2), which can be driven at a belt speed (RIG1) synchronous to the rotation speed (ROG) by means of the controllable drive device (40), which corresponds to a circumferential speed of the transport star (4) in a third radius (R3).

9. Method for the positionally stable transport of containers (2) along a circular-segment shaped transport path (21) between a container entrance (4.1) and a container exit (4.2), **characterised in that** the containers (2) are transported by a device in accordance with any one of the preceding claims.

10. Method according to claim 9, **characterised in that**, in an idling state, the at least one securing belt arrangement (23) is driven along an effective belt section (30) in contact on the surface or surface sections of the transport star (4), at a belt speed (RIG) synchronous with a rotation speed (ROG).

11. Method according to claim 9 or 10, **characterised in that**, during the filling of the circular-segment shaped transport path (21) with containers (2), the at least one securing belt arrangement (23) of the belt arrangement (22) continues to be driven at the belt speed (RIG) corresponding synchronously to the rotation speed (ROG), wherein the length of the effective belt section (30), at least over the second transport path (30.2), to ensure the positionally stable transport of the containers (2) and depending on the number of the containers (2) transported along the circular-segment shaped transport path (21), can be adjusted by means of a belt storage unit (27) in such a way that the at least one securing belt arrangement (23) exhibits, at least in the length-adjusted second transport path (30.2), a belt speed (RIG1) which is partially increased in relation to the belt speed (RIG).

12. Method according to any one of the preceding claims 9 to 11, **characterised in that**, after a complete detachment of the at least one securing belt arrangement (23) from the transport star (4), the belt speed (RIG) is increased in the region of the effective belt section (30) for the positional stabilisation of the containers (2).

13. Method according to any one of the preceding claims 9 to 12, **characterised in that** the at least one securing belt arrangement (23), at least in the idling state, is driven at a belt speed (RIG) which corresponds to the rotation speed (ROG), in such a way that, at least in the region of the circular-segment shaped transport path (21), no relative movement occurs between the transport star (4) and the belt section (30) taking effect in contact in this region, at the transport star (4).

14. Method according to any one of the preceding claims 9 to 13, **characterised in that** the at least one securing belt arrangement (23), in the idling state, is driven at a belt speed (RIG) which corresponds to a circumferential speed of the transport star (4) at a tangential point (TP) with a radius (R1).

15. Method according to any one of the preceding claims 9 to 14, **characterised in that**, during the filling of the circular-segment shaped transport path (21) with containers (2), the at least one securing belt arrangement (23) continues to be driven at a belt speed (RIG) which corresponds to a circumferential speed of the transport star (4) at a tangential point (TP) with a radius (R1).

16. Method according to any one of the preceding claims 9 to 15, **characterised in that**, at least during the filling of the circular-segment shaped transport path (21) with containers (2), the length of the effective belt section (30) is dynamically adjusted by means of the dynamic belt storage unit (27) for the partial increase of the belt speed (RIG1) required, in the region of the second transport path (30.2).

17. Method according to claim 16, **characterised in that**, at least during the filling of the circular-segment shaped transport path (21) with containers (2), the length of the effective belt section (30) is dynamically adjusted by means of the drive unit (25) in interaction with the dynamic belt storage unit (27) for the partial increase required of the belt speed (RIG1) in the region of the second transport path (30.2), **in that**, by means of the drive unit (25), the increasing and adjustment of the belt speed is arranged, and the maintaining constant of the belt speed (RIG) in the first transport path (30.1) takes place by the location change of the dynamic belt storage unit (27).

18. Method according to any one of the preceding claims 9 to 17, **characterised in that**, in the completely filled state of the circular-segment shaped transport path (21), the at least one securing belt arrangement (23) is driven at a belt speed (RIG1), which corresponds to the circumferential speed of the transport star (4) at the tangential point (TP) with the third radius (R3).

## Revendications

1. Dispositif servant au transport stable en position de contenants (2) le long d'un parcours de transport (21) partiellement circulaire entre une entrée de contenant (4.1) et une sortie de contenant (4.2),
comprenant une unité de commande (100) centrale, un système de transport en étoile (4) pouvant être entraîné autour d'un axe de rotation (RA) dans la direction de transport (TR) à une vitesse de rotation (ROG), avec plusieurs évidements (4.3) prévus au niveau de sa périphérie extérieure, servant à recevoir les contenants (2) ainsi qu'au moins un ensemble de courroie (22) avec au moins une courroie de blocage (23) circulant en périphérie sans fin, qui peut être entraînée au moyen d'un système d'entraînement (40) pouvant être commandé à au moins une vitesse de courroie (RIG, RIG1, RIG2), ainsi que présentant par ailleurs une unité de stockage de courroie (27) dynamique coopérant avec l'ensemble de courroie (22),
dans lequel le système de transport en étoile (4) est en liaison fonctionnelle avec l'au moins une courroie de blocage (23) pour stabiliser la position des contenants (2) au moins dans la zone du parcours de transport (21) partiellement circulaire,
dans lequel une section de courroie active (30) peut être réalisée à cet effet au moyen de l'au moins une courroie de blocage (23) dans la zone du parcours de transport (21) partiellement circulaire avec au moins une première section de transport (30.1), dans laquelle aucun contenant (4) n'est logé dans les évidements (4.3), et/ou avec une deuxième section de transport (30.2), dans laquelle des contenants (2) sont logés dans les évidements (4.3),
**caractérisé en ce que**
le dispositif est mis au point pour entraîner l'au moins une courroie de blocage (23) au moins dans la zone de la section de courroie active (30) à une vitesse de courroie (RIG, RIG1, RIG2) réalisée de manière synchrone par rapport à la vitesse de rotation (ROG) du système de transport en étoile (4) **en ce que** pour amener de manière stable en position le parcours de transport (21) partiellement circulaire avec des contenants (2) dans la deuxième section de transport (30.2), l'augmentation partielle de la vitesse de courroie (RIG1) requise en fonction du nombre des contenants (2) se trouvant dans la deuxième section de transport (30.2) peut être compensée au moyen de l'unité de stockage de courroie (27) dynamique, et dans lequel un desserrement de l'au moins une courroie de blocage (22) de la surface du système de transport en étoile dans la première section de transport (30.1) et la modification de vitesse liée peuvent être détectés dans le sens de roulement de la courroie de blocage (22) et en coopération avec l'unité de commande (100) centrale, la vitesse de courroie (RIG, RIG1, RIG2) peut être adaptée de manière régulée au moyen du système d'entraînement (40) pouvant être commandé dans la première section de transport (30.1).
- ou **en ce que** dans la deuxième section de transport (30.2), l'augmentation partielle de la vitesse de courroie (RIG1) requise en fonction du nombre de contenants (2) se trouvant dans la deuxième section de transport (30.2) peut être adaptée au moyen du système d'entraînement (40) régulé et en coopération avec l'unité de commande (100) centrale et l'unité de stockage de courroie (27) dynamique avant, et dans lequel un desserrement de l'au moins une courroie de blocage (22) de la surface du système de transport en étoile dans la première section de transport (30.1) et la modification de vitesse ainsi liée peuvent être détectés dans le sens de roulement de la courroie de blocage (22) et la vitesse de courroie (RIG, RIG1, RIG2) peut être compensée dans la première section de transport (30.1) au moyen de l'unité de stockage de courroie (27) dynamique,
dans lequel le dispositif présente un système de détection (200) servant à détecter des contenants (2) sur le trajet de transport et/ou le profil radial et/ou angulaire de la courroie de blocage (23) dans la zone de la section de courroie active (30) et en particulier de la première et de la deuxième section de transport (30.1, 30.2), dans lequel l'appui au niveau de et/ou le desserrement de l'au moins une courroie de blocage (22) de la surface ou des zones en surface dans la première section de transport (30.1) peuvent être détectés et/ou calculés au moyen du système de détection (200) et peuvent être utilisés par ailleurs pour la commande du système d'entraînement (40) et/ou de l'unité de stockage de courroie (27) dynamique.

2. Dispositif selon la revendication 1, **caractérisé en ce que** l'au moins une courroie de blocage (23) est réalisée au moins dans la zone de la section de courroie active (30) pour imprimer une force radiale agissant en direction de l'axe de rotation (RA) sur la surface enveloppante extérieure respective des contenants (2) sans force d'avancement dans la direction périphérique.

3. Dispositif selon la revendication 1 ou 2, **caractérisé en ce que** la première et/ou la deuxième section de transport (30.1, 30.2) de la section de courroie active (30) présentent une longueur variable en fonction du nombre des contenants (2) convoyés le long du parcours de transport (21) partiellement circulaire de telle manière que la section de courroie active (30) peut être réalisée par une des deux sections de transport (30.1, 30.2) seule et/ou par une combinaison de la première et de la deuxième section de transport (30.1, 30.2).

4. Dispositif selon l'une quelconque des revendications 1 à 3, **caractérisé en ce que** la section de courroie active (30) est formée par la première section de transport (30.1) dans un état de marche à vide du parcours de transport (21) partiellement circulaire, dans lequel la première section de transport (30.1), reposant au moins par endroits au niveau de la surface du système de transport en étoile (4), peut être entraînée au moyen du système d'entraînement (40) pouvant être commandé à une vitesse de courroie (RIG) synchrone avec la vitesse de rotation (ROG), qui correspond à une vitesse périphérique du système de transport en étoile (4) dans un premier rayon (R1).

5. Dispositif selon l'une quelconque des revendications 1 à 4, **caractérisé en ce que** pendant le remplissage du parcours de transport (21) partiellement circulaire avec des contenants (2), la section de courroie active (30) est formée par une combinaison de la première section de transport (30.1) et de la deuxième section de transport (30.2), qui peuvent être entraînées au moyen du système d'entraînement (40) pouvant être commandé à une vitesse de courroie (RIG) synchrone avec la vitesse de rotation (ROG), qui correspond à une vitesse périphérique du système de transport en étoile (4) dans le premier rayon (R1).

6. Dispositif selon l'une quelconque des revendications 1 à 5, **caractérisé en ce que** directement au moyen de l'unité de stockage de courroie (27) dynamique ou indirectement en coopération avec l'unité d'entraînement (4) pour l'augmentation partielle requise de la vitesse de courroie (RIG1) de l'au moins une courroie de blocage (23), la longueur de courroie de la section de courroie active (30) peut être réglée de manière dynamique au moins dans la zone de la deuxième section de transport (30.2) au moins pendant le remplissage du parcours de transport (21) partiellement circulaire en contenants (2).

7. Dispositif selon l'une quelconque des revendications 1 à 6, **caractérisé en ce que** l'unité de commande (100) est réalisée pour piloter le système d'entraînement (40) de telle manière qu'une partie de vitesse radiale par rapport à l'axe de rotation (RA) de la section de courroie active (30) peut être compensée au moyen du système d'entraînement (40) au moment du relèvement de l'au moins une courroie de blocage (23) dans la zone de la première section de transport (30.1) de la surface ou des zones en surface.

8. Dispositif selon l'une quelconque des revendications 1 à 7, **caractérisé en ce que** dans un état totalement rempli du parcours de transport (21) partiellement circulaire en contenants, la section de courroie active (30) est formée par la deuxième section de transport (30.2), qui peut être entraînée au moyen du système d'entraînement (40) pouvant être commandé à une vitesse de courroie (RIG1) synchrone avec la vitesse de rotation (ROG), qui correspond à une vitesse périphérique du système de transport en étoile (4) dans un troisième rayon (R3).

9. Procédé servant au transport stable en position de contenants (2) le long d'un parcours de transport (21) partiellement circulaire entre une entrée de contenant (4.1) et une sortie de contenant (4.2), **caractérisé en ce que** les contenants (2) sont transportés avec un dispositif selon l'une quelconque des revendications précédentes.

10. Procédé selon la revendication 9, **caractérisé en ce que** dans un état de marche à vide, l'au moins une courroie de blocage (23) est entraînée le long d'une section de courroie active (30), reposant au niveau de la surface ou de zones en surface du système de transport en étoile (4), à une vitesse de courroie (RIG) synchrone avec la vitesse de rotation (ROG).

11. Procédé selon la revendication 9 ou 10, **caractérisé en ce que** pendant le remplissage du parcours de transport (21) partiellement circulaire avec des contenants (2), l'au moins une courroie de blocage (23) de l'ensemble de courroie (22) fonctionne par ailleurs à la vitesse de courroie (RIG) correspondant de manière synchrone à la vitesse de rotation (ROG), dans lequel la longueur au moins sur la deuxième section de transport (30.2) de la section de courroie active (30) est adaptée au moyen d'une unité de stockage de courroie (27) en fonction du nombre des contenants (2) transportés le long du parcours de transport (21) partiellement circulaire aux fins du transport stable en position des contenants (2) de telle manière que l'au moins une courroie de blocage (23) présente au moins dans la deuxième section de transport (30.2) adaptée dans la longueur une vitesse de courroie (RIG1) en partie augmentée par rapport à la vitesse de courroie (RIG).

12. Procédé selon l'une quelconque des revendications 9 à 11, **caractérisé en ce qu'**après un desserrement total de l'au moins une courroie de blocage (23) du système de transport en étoile (4), la vitesse de courroie (RIG) est augmentée dans la zone de la section de courroie active (30) aux fins de la stabilisation de position des contenants (2).

13. Procédé selon l'une quelconque des revendications précédentes 9 à 12, **caractérisé en ce que** l'au moins une courroie de blocage (23) fonctionne au moins dans l'état de marche à vide à une vitesse de courroie (RIG) correspondant à la vitesse de rotation (ROG) de telle manière qu'aucun déplacement relatif entre le système de transport en étoile (4) et la section de courroie active (30) reposant au niveau du système de transport en étoile (4) dans la zone du parcours de transport (21) partiellement circulaire n'a lieu au moins dans ladite zone.

14. Procédé selon l'une quelconque des revendications précédentes 9 à 13, **caractérisé en ce que** l'au moins une courroie de blocage (23) fonctionne dans l'état de marche à vide à une vitesse de courroie (RIG), qui correspond à une vitesse périphérique du système de transport en étoile (4) dans un point tangentiel (TP) avec un rayon (R1).

15. Procédé selon l'une quelconque des revendications 9 à 14, **caractérisé en ce que** pendant le remplissage du parcours de transport (21) partiellement circulaire avec des contenants (2), l'au moins une courroie de blocage (23) fonctionne par ailleurs à une vitesse de courroie (RIG), qui correspond à une vitesse périphérique du système de transport en étoile (4) dans un point tangentiel (TP) avec un rayon (R1).

16. Procédé selon l'une quelconque des revendications 9 à 15, **caractérisé en ce qu'**au moins pendant le remplissage du parcours de transport (21) partiellement circulaire avec des contenants (2), la longueur de la section de courroie active (30) est réglée de manière dynamique au moyen de l'unité de stockage de courroie (27) dynamique pour l'augmentation partielle requise de la vitesse de courroie (RIG1) dans la zone de la deuxième section de transport (30.2).

17. Procédé selon la revendication 16, **caractérisé en ce qu'**au moins pendant le remplissage du parcours de transport (21) partiellement circulaire avec des contenants (2), la longueur de la section de courroie active (30) est réglée de manière dynamique au moyen de l'unité d'entraînement (25) en coopération avec l'unité de stockage de courroie (27) dynamique pour l'augmentation partielle requise de la vitesse de courroie (RIG1) dans la zone de la deuxième section de transport (30.2) **en ce que** l'augmentation et l'adaptation de la vitesse de courroie sont entraînées par l'intermédiaire de l'unité d'entraînement (25) et le maintien de la vitesse de courroie (RIG) constante dans la première section de transport (30.1) a lieu par l'intermédiaire de la modification de position de l'unité de stockage de courroie (27) dynamique.

18. Procédé selon l'une quelconque des revendications 9 à 17, **caractérisé en ce que** dans l'état totalement rempli du parcours de transport (21) partiellement circulaire, l'au moins une courroie de blocage (23) fonctionne à une vitesse de courroie (RIG1), qui correspond à la vitesse périphérique du système de transport en étoile (4) dans le point tangentiel (TP) avec le troisième rayon (R3).
